# EUROPÄISCHE PATENTSCHRIFT

(11) **EP 4 433 734 B1**
(45) Veröffentlichungstag und Bekanntmachung des Hinweises auf die Patenterteilung: **14.01.2026**
(21) Anmeldenummer: 22818218.4
(22) Anmeldetag: 11.11.2022
(51) Int. Cl.: F16L 9/17, B21C 37/10, F16L 9/21

(54) **DÜNNWANDIGES ROHR, METALLISCHES FLACHMATERIAL UND VERFAHREN ZUM HERSTELLEN EINES DÜNNWANDIGEN ROHRS**
THIN-WALLED PIPE, METAL FLAT MATERIAL, AND METHOD FOR PRODUCING A THIN-WALLED PIPE
TUYAU À PAROI MINCE, MATÉRIAU PLAT MÉTALLIQUE, ET PROCÉDÉ DE PRODUCTION D'UN TUYAU À PAROI MINCE

(30) Priorität: 17.11.2021 DE 102021130027
(43) Veröffentlichungstag der Anmeldung: 25.09.2024
(73) Patentinhaber: Scherdel Innotec Forschungs- Und Entwicklungs GmbH, 95615 Marktredwitz (DE)
(72) Erfinder: VOGEL, Egbert, 95615 Marktredwitz (DE)
(74) Vertreter: Schmitt-Nilson Schraud Waibel Wohlfrom Patentanwälte Partnerschaft mbB
(86) Internationale Anmeldenummer: PCT/EP2022/081595
(87) Internationale Veröffentlichungsnummer: WO 2023/088799

(56) Entgegenhaltungen:
- AU-B2- 503 128
- DE-A1- 10 321 863
- DE-A1- 102012 212 907
- FR-B1- 2 810 265
- US-A- 2 762 117

## Beschreibung

Die vorliegende Erfindung betrifft ein dünnwandiges Rohr, ein metallisches Flachmaterial zum Herstellen eines dünnwandigen Rohrs und ein Verfahren zum Herstellen eines dünnwandigen Rohrs.

Aus der DE 103 21 863 A1 ist ein Rohr, ein Verfahren zur Herstellung eines Rohrs und eine Verwendung eines Rohrs bekannt. Das dort gezeigte Rohr ist aus einem im Wesentlichen ebenen metallischen Blech hergestellt. Die Längskanten des Blechs sind durch formschlüssig ineinandergreifende Elemente miteinander verbunden.

Aus der FR 2 810 265 B1 ist ein Verfahren zum Zusammenbau von zwei durch dieses Verfahren erhaltenen Blatt- und Rohrelementen bekannt. Bei dem Verfahren werden entlang einer Kante des Blechs in Abständen voneinander angeordnete Zungen geformt. Jede Zunge hat einen vergrößerten Kopf und einen Hals, um den Kopf mit der Blattkante zu verbinden. In der gegenüberliegenden Blattkante ist eine Reihe von Löchern eingeformt, die eine den Zungen entsprechende Form aufweisen. Die Blechkanten werden mit den in die Löcher passenden Federn aufeinandergelegt und mit Druck beaufschlagt. Dadurch werden die Kanten verbunden. Außerdem ist ein mit diesem Verfahren hergestelltes Rohr offenbart.

In der Praxis hat sich gezeigt, dass ein solches Rohr dazu neigt, dass sich seine ineinandergreifenden Elemente lösen und somit das Rohr insgesamt nicht formstabil ist. Dieser nachteilige Effekt ist besonders bei dünnwandigen Rohren sehr stark ausgeprägt.

Schon bei einem leichten Lösen der Elemente treten verhältnismäßig große Zwischenräume auf, sodass die Formstabilität des Rohrs nicht mehr gegeben ist.

Es ist daher eine Aufgabe der vorliegenden Erfindung, ein dünnwandiges Rohr anzugeben, das dauerhaft formstabil ist und die Funktion des Rohrs dauerhaft sicherstellt, dabei aber gleichzeitig kostengünstig in der Herstellung ist.

Des Weiteren sollen ein metallisches Flachmaterial sowie ein Herstellungsverfahren angegeben werden, mit denen kostengünstig ein dünnwandiges Rohr hergestellt werden kann, das dauerhaft formstabil ist und seine Funktion zuverlässig und dauerhaft gewährleistet.

Diese Aufgaben werden durch den Gegenstand der unabhängigen Patentansprüche vollständig gelöst. Vorteilhafte Weiterbildungen ergeben sich aus den abhängigen Patentansprüchen.

Ein erfindungsgemäßes dünnwandiges Rohr umfasst die Merkmale von Patentanspruch 1.

Gemäß einem Grundgedanken der Erfindung wird ein Lösen eines Vorsprungs an einer ersten Längskante des Flachmaterials gegenüber einer korrespondierenden Aussparung an der zweiten Längskante des Flachmaterials dadurch zuverlässig vermieden, indem wenigstens ein Paar aus einer Vorsprungsflanke und aus einer daran anliegenden Aussparungsflanke, in einer axialen, entlang des Verbindungsabschnitts verlaufenden Schnittebene gesehen, jeweils einen schrägen Verlauf von Rohraußenwand zu Rohrinnenwand aufweist.

Die Verbindung zwischen den Vorsprüngen und damit korrespondierenden Aussparungen wird nicht - wie dies ebenfalls denkbar wäre - durch Überlappen von zwei oder mehreren Schichten erreicht, sondern durch ein formschlüssiges Ineinandergreifen, wobei wenigstens ein Paar aus Vorsprungsflanke und daran anliegender Aussparungsflanke einen schrägen Verlauf von Rohraußenwand zu Rohrinnenwand aufweist.

Die erfindungsgemäße Verbindung beruht rein auf einem Formschluss durch geometrisch abgestimmte Verbindungselemente in Verbindung mit einer Schrägstellung wenigstens eines Paares aus einer Vorsprungsflanke und einer daran anliegender Aussparungsflanke.

Somit wird der Vorsprung gegen ein Herausrutschen aus der Aussparung in Richtung radial nach außen und insbesondere in Richtung Auffalten des zu dem Rohr gerollten oder gebogenen dünnen metallischen Flachmaterials gesichert, insbesondere dann, wenn das Paar aus Vorsprungsflanke und Aussparungsflanke quasi einen Öffnungswinkel nach innen und einen Schließwinkel nach außen ausbilden.

Gemäß einer der Erfindung zugrunde liegenden Erkenntnis erfolgt nämlich das Lösen der Verbindungselemente z. B. der Vorsprünge bei der DE 103 21 863 A1 in einer radialen Auffaltrichtung nach außen. Ein Lösen in Auffaltrichtung des metallischen Flachmaterials oder in radialer Richtung wird durch die wie vorstehend beschriebene erfindungsgemäße Ausbildung des wenigstens eines Paars aus Vorsprungsflanke und daran anliegender Aussparungsflanke zuverlässig vermieden.

Gemäß einem weiteren Grundgedanken der Erfindung ist es durch die wie vorstehend beschriebene Ausbildung wenigstens eines Paars aus Vorsprungsflanke und daran anliegender Aussparungsflanke möglich, das Rohr mit sehr geringer Wandstärke (n), also sehr dünnwandig auszubilden. Die Wandstärke des zu einem Rohr gerollten oder gebogenen dünnen metallischen Flachmaterials beträgt 0,05 - 1,00 mm.

Der Erfinder des vorliegenden Anmeldungsgegenstandes haben herausgefunden, dass die herkömmlichen Herstellungsverfahren für Rohre, wie sie zum Beispiel in der DE103 21 863 A1 beschrieben sind, eine natürliche Untergrenze bei der Materialstärke haben. Wenn also Rohre mit einer zu geringen Wandstärke auf die dort beschriebene Weise hergestellt werden, wird keine stabile Verbindung erreicht wird, und das so hergestellte Rohr ist nicht formstabil. Dies wird erfindungsgemäß verbessert. Ein erfindungsgemäßes Rohr ist sehr formstabil.

Ein erfindungsgemäßes Rohr bietet zudem für Fluid mit größerer Viskosität, zum Beispiel für zähflüssige Öle oder für feinkörnige Feststoffe, zum Beispiel Sand, eine ausreichende Dichtigkeit.

Durch die Richtung und Schrägstellung des wenigstens eines Paars aus Vorsprungsflanke und daran anliegender Aussparungsflanke wird eine hohe Haltbarkeit und Formstabilität der Verbindung und somit des gesamten Rohres erreicht.

Unter einem dünnwandigen Rohr wird dabei vorliegend ein zu einem Rohr gerolltes oder gebogenes dünnes metallisches Flachmaterial verstanden, unabhängig von dessen Gestalt im Querschnitt, sodass neben runden Querschnitte auch ovale Querschnitte, elliptische Querschnitte, Multi-Arc-Querschnitte, oder eckige Querschnitte, z. B. vier-, fünf-, sechs- oder mehrkantige Rohrquerschnitte von der Erfindung umfasst sind.

Ebenso sind auch Rohre von kurzer Länge, z. B. Hülsen mit von der Erfindung umfasst.

Der Verbindungsabschnitt mit dem wenigstens einem Paar aus Vorsprungsflanke und daran anliegender Aussparungsflanke, die erfindungsgemäß ausgebildet sind, kann auch als stirnseitige Verbindung bzw. als stirnseitiger Verbindungsabschnitt bezeichnet werden.

Gemäß einem weiteren Grundgedanken der vorliegenden Erfindung ist der Verbindungsabschnitt mit dem erfindungsgemäß ausgebildeten wenigstens einem Paar aus Vorsprungsflanke und daran anliegender Aussparungsflanke stoffschlussfrei, also ohne zusätzliche Stoffschlussverbindung, die z. B. durch Schweißen oder Löten ausgebildet sein könnte, ausgebildet. Dies reduziert die Herstellungskosten. Dennoch ist das Flachmaterial entlang seines Verbindungsabschnitts zuverlässig und dauerhaft miteinander verbunden, und das Rohr somit dauerhaft formstabil und dauerhaft zuverlässig gegen ein Lösen der Verbindungselemente gesichert.

Der Einsatz von erfindungsgemäßen dünnwandigen Rohren ist vielfältig. Sie können z. B. in der Medizintechnik bei Insulinzylindern oder in der Elektrotechnik bei kleinen Elektromotoren oder Polgehäusen von kleinen Elektromotoren zum Einsatz kommen.

Das erfindungsgemäße dünnwandige Rohr verwirklicht eine selbstformende Druck-Füge-Formschlussverbindung.

Gemäß der Erfindung schließt wenigstens ein Paar aus einer Vorsprungsflanke und aus einer daran anliegenden Aussparungsflanke, in einer axialen, entlang des Verbindungsabschnitts verlaufenden Schnittebene gesehen, jeweils einen Winkel von 15 - 75°, insbesondere 30 - 60° mit der Rohrradialebene ein.

Die Vorsprünge an der ersten Längskante weisen jeweils zwei seitliche Vorsprungsflanken und eine vordere Stirnseite bzw. einen vorderen Stirnseitenbereich auf, der bzw. die die zwei Vorsprungsflanken miteinander verbindet. Zwischen zwei benachbarten Vorsprüngen ist jeweils eine rückwärtige Bodenseite bzw. ein rückwärtiger Bodenseitenbereich angeordnet.

Die Aussparungen an der zweiten Längskante weisen jeweils zwei seitliche Aussparungsflanken und eine rückwärtige Bodenseite bzw. einen rückwärtigen Bodenseitenbereich auf, der die zwei seitlichen Aussparungsflanken miteinander verbindet. Zwischen zwei benachbarten Aussparungsflanken ist jeweils eine vordere Stirnseite bzw. ein vorderer Stirnseitenbereich angeordnet.

Die seitlichen Vorsprungsflanken, die vorderen Stirnseiten bzw. vorderen Stirnseitenbereiche und die rückwärtigen Bodenseiten bzw. rückwärtiger Bodenseitenbereiche der Vorsprünge und ebenso die seitlichen Aussparungsflanken, die rückwärtigen Bodenseite bzw. rückwärtigen Bodenseitenbereiche und die vorderen Stirnseiten bzw. vorderen Stirnseitenbereiche der Aussparungen erstrecken sich von der ersten zur zweiten Oberfläche des dünnen, metallischen Flachmaterials, bzw. von der Außenmantelfläche zur Innenmantelfläche des dünnwandigen Rohrs. Deren Höhe kann im Wesentlichen der Wandstärke entsprechen.

Die axiale Schnittebene des letzten Merkmals von Anspruch 1 verläuft durch die Symmetrieachse des Rohrs. Diese axiale Schnittebene, anhand derer der schräge Verlauf des Paars aus Vorsprungsflanke und daran anliegender Aussparungsflanke definiert ist, verläuft zudem entlang des Verbindungsabschnitts.

Der Verbindungsabschnitt erstreckt sich in Rohrlängsrichtung. Entlang des Verbindungsabschnitts greifen die Verbindungselemente an den Längskanten formschlüssig ineinander und somit sind die Längskanten miteinander verbunden.

Diese Bedingung ist bei einer Vielzahl von axialen Schnittebenen erfüllt, solange sie jeweils durch die Symmetrieachse des Rohrs und durch den Verbindungsabschnitt verlaufen, in dem das Paar aus Vorsprungsflanke und daran anliegender Aussparungsflanke jeweils einen schrägen Verlauf von Rohraußenwand zu Rohrinnenwand aufweist.

Gemäß einer Ausführungsform weist das Rohr ein erstes axiales Rohrende und ein zweites axiales Rohrende auf.

Erfindungsgemäß weist wenigstens ein Paar aus einer Vorsprungsflanke und aus einer daran anliegenden Aussparungsflanke, in einer Schnittebene entlang des Verbindungsabschnitts gesehen, jeweils einen schrägen Verlauf mit einer ersten schrägen Verlaufsrichtung von Rohraußenwand zu Rohrinnenwand in Richtung erstes Rohrende auf, und wenigstens ein Paar aus einer Vorsprungsflanke und aus einer daran anliegenden Aussparungsflanke weist, in einer Schnittebene entlang des Verbindungsabschnitts gesehen, jeweils einen schrägen Verlauf mir einer gegenläufigen zweiten schrägen Verlaufsrichtung von Rohraußenwand zu Rohrinnenwand in Richtung zweites Rohrende auf.

Durch eine derartige Ausbildung mit wenigstens einem Paar aus Vorsprungsflanke und daran anliegender Aussparungsflanke mit erster schräger Verlaufsrichtung und wenigstens einem Paar aus Vorsprungsflanke und daran anliegender Aussparungsflanke mit gegenläufiger zweiter schräger Verlaufsrichtung ist eine gegensinnige Schrägstellung dieser Paare aus Vorsprungsflanke und daran anliegender Aussparungsflanke gegeben, woraus ein Selbsthemmeffekt resultiert, der eine besonders zuverlässige und dauerhafte Verbindung des jeweiligen Vorsprungs gegenüber der korrespondierenden Aussparung resultiert.

Erfindungsgemäß sind Paare aus einer Vorsprungsflanke une aus einer daran anliegenden Aussparungsflanke mit erster schräger Verlaufsrichtung, entlang des Verbindungsabschnitts gesehen, abwechselnd mit Paaren aus einer Vorsprungsflanke und aus einer daran anliegenden Aussparungsflanke mit gegenläufiger zweiter schräger Verlaufsrichtung angeordnet, sodass die Vorsprünge und Aussparungen insbesondere, in einer Schnittebene entlang des Verbindungsabschnitts gesehen, abwechselnd im Wesentlichen die Gestalt eines Parallelogramms und im Wesentlichen die Gestalt eines Trapezes aufweisen.

Durch eine solche Anordnung von Paaren von Vorsprungsflanken und daran anliegenden Aussparungsflanken wird eine besonders dauerhafte und zuverlässige Verbindung der Verbindungselemente entlang des Verbindungsabschnitts und eine zuverlässige Formstabilität des dünnwandigen Rohrs über den gesamten Verbindungsabschnitt erreicht.

Gemäß einer weiteren Ausführungsform ist die Reihenfolge der Paare aus einer Vorsprungsflanke und aus einer daran anliegenden Aussparungsflanke, entlang des Verbindungsabschnitts gesehen, wenigstens bereichsweise wie folgt:
abwechselnd jeweils zwei Paare mit erster schräger Verlaufsrichtung, und jeweils zwei, vier oder sechs Paare mit gegenläufiger zweiter schräger Verlaufsrichtung; oder
abwechselnd jeweils vier Paare mit erster schräger Verlaufsrichtung, und ieweils zwei, vier oder sechs Paare mit gegenläufiger zweiter schräger Verlaufsrichtung;
abwechselnd jeweils sechs Paare mit erster schräger Verlaufsrichtung, und jeweils zwei, vier oder sechs Paare mit gegenläufiger zweiter schräger Verlaufsrichtung.

Gemäß einer weiteren Ausführungsform greift wenigstens ein Vorsprung so in eine korrespondierende Aussparung ein, dass die Stirnseite des Vorsprungs wenigstens bereichsweise an der Stirnseite der korrespondierenden Aussparung anliegt; und/oder die Stirnseiten liegen im Wesentlichen in einer axialen, entlang des Verbindungsabschnitts verlaufenden Ebene.

Dieser Ausführungsform liegt die Erkenntnis der Erfinder zugrunde, dass es für eine dauerhafte Verbindung zwischen Vorsprüngen und korrespondierenden Aussparungen nicht erforderlich ist, dass zwischen Stirnseite des Vorsprungs und Stirnseite der korrespondierenden Aussparung ein schräger Verlauf vorgesehen sein muss. obwohl dies selbstverständlich ebenfalls denkbar oder von der vorliegenden Erfindung umfasst ist. Die Stirnseiten von Vorsprung und korrespondierender Aussparung liegen dabei insbesondere aneinander an und im Wesentlichen in einer axialen, entlang des Verbindungsabschnitts verlaufenden Ebene, z. B. einer Radialebene oder einer zu der Radialebene im Wesentlichen parallelen Ebene.

Gemäß einer weiteren Ausführungsform ist im Anliegebereich wenigstens eines Paars aus einer Vorsprungsflanke und aus einer daran anliegenden Aussparungsflanke ein Wulst, ein Materialanhäufungsbereich oder ein Materialverdickungsbereich gebildet ist.

Ein solcher Wulst, ein solcher Materialanhäufungsbereich oder solcher Materialverdickungsbereich resultiert daraus, dass bei dem metallischen Flachmaterial, aus dem das dünnwandige Rohr gerollt oder gebogen wird, der betreffende Vorsprung bzw. die betreffenden Vorsprünge mit Übermaß, insbesondere in der Breite, gegenüber der korrespondierenden Aussparung / den korrespondierenden Aussparungen ausgebildet sein kann bzw. können, wie dies nachfolgend mit Bezug auf das metallische Flachmaterial und das Herstellungsverfahren noch näher erläutert werden wird.

Ein solcher Wulst, ein solcher Materialanhäufungsbereich oder solcher Materialverdickungsbereich kann vermieden oder verringert werden, wenn an den Rohrquerenden des metallischen Flachmaterials eine entsprechende Taillierung oder ein entsprechender materialfreier Bereich vorgesehen wird. Beim Fügen der Vorsprünge mit Übermaß, insbesondere in der Breite, gegenüber den korrespondierenden Aussparungen, kann das überschüssige Material den zuvor materialfreien Bereich der Taillierung/den zuvor materialfreien Bereich einnehmen.

Gemäß einer weiteren Ausführungsform weist wenigstens ein Vorsprung und/oder wenigstens eine Aussparung einen verjüngten Halsbereich und einen verbreiterten Kopfbereich auf.

Gemäß einer weiteren Ausführungsform weist wenigstens ein Vorsprung und/oder wenigstens eine Aussparung einen verjüngten Halsbereich und einen verbreiterten Kopfbereich auf, mit einem Zwischenkragen im Halsbereich, der den Halsbereich in einen kopfseitigen Aussparungsabschnitt und einen bodenseitigen Aussparungsabschnitt untergliedert.

Gemäß einer weiteren Ausführungsform hat wenigstens ein Vorsprung und/oder wenigstens eine Aussparung, in Draufsicht gesehen, die Gestalt eines gerundeten Puzzleteilvorsprungs bzw. einer gerundeten Puzzleteilaussparung, oder die Gestalt eines Schwalbenschwanzes.

Derart ausgebildete Vorsprünge und Aussparungen können einfach hergestellt und bei der Bildung eines Rohrs miteinander verbunden werden. Gleichzeitig stellen diese aufgrund ihrer Geometrie eine besonders zuverlässige und dauerhafte Verbindung bereit.

Dabei kann der schräge Verlauf von Vorsprungsflanke zu daran anliegender Aussparungsflanke nur im verbreiterten Kopfbereich vorhanden sein, und im verjüngten Halsbereich kann ein gerader, insbesondere im Wesentlichen radialer Verlauf zwischen Halsbereich des Vorsprungs und Halsbereich der Aussparung vorhanden sein bzw. die entsprechende Ebene kann im Wesentlichen in der Rohrradialebene liegen.

Alternativ dazu kann der schräge Verlauf von Vorsprungsflanke zu der daran anliegenden Aussparungsflanke sowohl im Kopfbereich als auch im Halsbereich ausgebildet sein.

Die vorliegende Erfindung betrifft auch ein metallisches Flachmaterial zur Herstellung eines dünnwandigen Rohrs durch Rollen oder Biegen, mit den Merkmalen von Patentanspruch 6.

Die Wandstärke des metallischen Flachmaterials beträgt 0,05 - 1,00 mm.

Die vorstehend mit Bezug auf das erfindungsgemäße dünnwandige Rohr angegebenen Vorteile und Ausführungsformen treffen in analoger Weise auf das erfindungsgemäße metallische Flachmaterial zu.

Dadurch, dass das als Vorsprung ausgebildete Verbindungselement bzgl. der Ebene des Hauptkörpers des metallischen Flachmaterials gebogen ist, kann ein solches Verbindungselement, beim Rollen oder Biegen des Flachmaterials zu einem dünnwandigen Rohr, in ein korrespondierendes, als Aussparung ausgebildetes Verbindungselement eingreifen, und in die Ebene des Hauptkörpers des metallischen Flachmaterials, insbesondere in die Ebene des Verbindungsabschnitts gebogen werden, sodass bei wenigstens einer, insbesondere bei beiden Vorsprungsflanken dieses Vorsprungs und der jeweils daran anliegenden Aussparungsflanke ein schräger Verlauf von Rohraußenwand zu Rohrinnenwand entsteht, oder dass das Paar aus Vorsprungsflanke und daran anliegender Aussparungsflanke einen Winkel von 15 - 75°, insbesondere 30 - 60° mit der Rohrradialebene einschließt.

Somit kann durch ein solchermaßen ausgebildetes metallisches Flachmaterial ein erfindungsgemäßes dünnwandiges Rohr hergestellt werden, bei dem ein Lösen der Verbindungselemente voneinander, z. B. in Auffaltrichtung bzw. in Richtung radial nach außen, vermieden und eine dauerhafte Formstabilität sichergestellt werden.

Gemäß einer Ausführungsform kann auch wenigstens ein als Aussparung ausgebildetes Verbindungselement wenigstens bereichsweise bzgl. der Ebene des Hauptkörpers des metallischen Flachmaterials gebogen sein.

Gemäß der erfinderischen Ausführung des metallischen Flachmaterials ist der Vorsprung mit Übermaß gegenüber der korrespondierenden Aussparung ausgebildet. Die Größe des Übermaßes kann dabei unter Berücksichtung der Materialart, der Materialstärke und der Zugfestigkeit/Härte gewählt werden. Dabei kann das Übermaß so gewählt werden, dass die Breite des Vorsprungs z.B. um ein Übermaß von 0,05 - 1,0 mm größer als die Breite der korrespondierenden Aussparung ist. Die Länge des Vorsprungs kann im Wesentlichen der Länge der Aussparung entsprechen.

Durch die Übermaßpassung des Vorsprungs gegenüber der korrespondierenden Aussparung, insbesondere in Breitenrichtung, wird die Bildung eines jeweils schrägen Verlaufs von Vorsprungsflanke zu der jeweils daran anliegenden Aussparungsflanke unterstützt.

Es entsteht somit eine formschlüssige, nicht aber stoffschlüssige Verbindung zwischen Vorsprung und korrespondierender Aussparung, mit schrägem seitlichen Flankenverlauf.

Wie bereits oben erläutert, kann, bedingt durch die Übermaßpassung in Querrichtung, das überschüssige Material im Bereich von Vorsprungsflanke und daran anliegender Aussparungsflanke ein Wulst, ein Materialanhäufungsbereich oder ein Materialverdickungsbereich entstehen.

Bei dem erfindungsgemäßen metallischen Flachmaterial hat der Vorsprung, in Vordersicht auf die erste Längskante gesehen, einen geraden Verlauf und schließt einen Winkel mit der Ebene des Hauptkörpers des metallischen Flachmaterials ein.

Erfindungsgemäß ist wenigstens ein Vorsprung mit erster Verlaufsrichtung und wenigstens ein Vorsprung mit zweiter Verlaufsrichtung vorgesehen.

Der Vorsprung mit erster Verlaufsrichtung weist dabei, in Vordersicht auf die erste Längskante gesehen, eine Steigung relativ vom ersten Flachmaterialende zu zweitem Flachmaterialende auf.

Der Vorsprung mit zweiter Verlaufsrichtung weist dabei, in Vordersicht auf die erste Längskante gesehen, eine Steigung relativ vom zweiten Flachmaterialende zu erstem Flachmaterialende auf.

Gemäß einer weiteren Ausführungsform ist die Reihenfolge der Vorsprünge mit erster Verlaufsrichtung und der Vorsprünge mit zweiter Verlaufsrichtung, entlang der Längskante gesehen, wenigstens bereichsweise wie folgt:
abwechselnd jeweils ein Vorsprung mit erster Verlaufsrichtung und ein bis fünf Vorsprünge mit zweiter Verlaufsrichtung; oder
abwechselnd jeweils zwei Vorsprünge mit erster Verlaufsrichtung und ein bis fünf Vorsprünge mit zweiter Verlaufsrichtung; oder
abwechselnd jeweils drei Vorsprünge mit erster Verlaufsrichtung und ein bis fünf Vorsprünge mit zweiter Verlaufsrichtung.

Ein derart ausgebildeter Vorsprung kann bzw. derart ausgebildete Vorsprünge können einfach und kostengünstig, z. B. durch Stanzen und anschließendes Biegen bei dem metallischen Flachmaterial erzeugt bzw. mit diesem hergestellt werden.

Beim Rollen oder Biegen des metallischen Flachmaterials zu einem dünnwandigen Rohr kann ein solcher Vorsprung bzw. können solche Vorsprünge gut und automatisiert gefügt und in die Ebene, insbesondere in die Tangentialebene des Verbindungsabschnitts gebogen werden, sodass diese Vorsprünge in entsprechende Aussparungen eingreifen und mit diesen einen Formschluss mit schräger Verlaufsrichtung von anliegenden Vorsprungs- und Aussparungsflanken bilden.

Gemäß einer weiteren Ausführungsform können die Aussparungen an der zweiten Längskante des metallischen Flachmaterials, die jeweils in Längsposition zwischen zwei benachbarten Vorsprüngen liegen, jeweils eine inverse Form zu den Vorsprüngen haben.

Gemäß einer weiteren Ausführungsform kann wenigstens ein Vorsprung und/oder wenigstens eine Aussparung einen verjüngten Halsbereich und einen verbreiterten Kopfbereich aufweisen.

Gemäß einer weiteren Ausführungsform weist wenigstens ein Vorsprung und/oder wenigstens eine Aussparung einen verjüngten Halsbereich und einen verbreiterten Kopfbereich auf, mit einem Zwischenkragen im Halsbereich, der den Halsbereich in einen kopfseitigen Aussparungsabschnitt und einen bodenseitigen Aussparungsabschnitt untergliedert.

Gemäß einer weiteren Ausführungsform hat wenigstens ein Vorsprung und/oder wenigstens eine Aussparung, in Draufsicht gesehen, die Gestalt eines gerundeten Puzzleteilvorsprungs bzw. einer gerundeten Puzzleteilaussparung, oder die Gestalt eines Schwalbenschwanzes.

Die Reihenfolge der Vorsprünge mit erster Verlaufsrichtung und mit zweiter Verlaufsrichtung kann dabei je nach Bedarf angepasst werden.

Für diese Ausführungsform gelten die vorstehend mit Bezug auf das dünnwandige Rohr bereits angegebenen Vorteile.

Die Erfindung betrifft auch ein Verfahren zum Herstellen eines dünnwandiges Rohrs nach Anspruch 9.

Durch ein solches erfindungsgemäßes Verfahren kann auf einfache und kostengünstige Weise ein dünnwandiges Rohr der hier beschriebenen Art hergestellt werden, dessen Verbindungselemente zuverlässig und dauerhaft miteinander verbunden sind, wie dies mit Bezug auf Anspruch 1 erläutert worden ist, ohne dass hierfür zusätzlich eine Schweißverbindung vorzusehen ist.

Das erfindungsgemäße Verfahren ist automatisiert durchführbar, sodass eine große Zahl von erfindungsgemäßen formstabilen dünnwandigen Rohren hergestellt werden kann.

Die vorstehend mit Bezug auf das erfindungsgemäße dünnwandige Rohr und das erfindungsgemäße metallische Flachmaterial angegebenen Vorteile und Ausführungsformen treffen in gleicher Weise auf das erfindungsgemäße Verfahren zu.

Zur Vermeidung von Wiederholungen werden diese nicht noch einmal in verfahrensmäßiger Entsprechung wiederholt. Die Anmelderin behält sich jedoch ausdrücklich das Recht vor, zu einem späteren Zeitpunkt Verfahrensansprüche aufzustellen, die den abhängigen Produktansprüchen entsprechen.

Die vorliegende Erfindung ist nachfolgend anhand von Ausführungsbeispielen mit Bezug auf die beiliegenden Figuren näher erläutert.

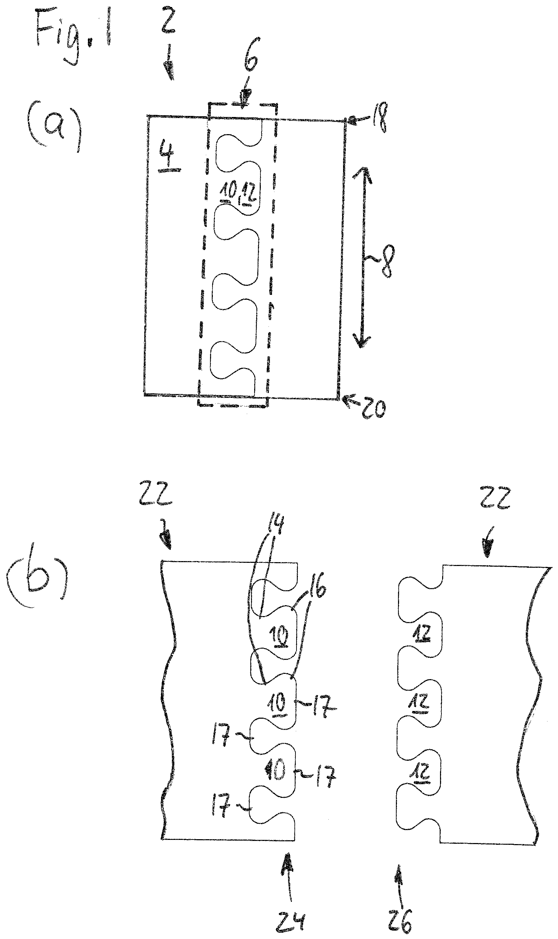

Figur 1 zeigt anhand ihrer Teilfigur 1(a) eine Seitenansicht eines Rohrs, bei dem Vorsprünge und Aussparungen entlang eines Verbindungsabschnitts ineinander eingreifen, und anhand ihrer Teilfigur 1(b) zwei metallische Flachmaterialien mit Vorsprüngen an einer ersten Längskante und mit Aussparungen an einer zweiten Längskante, zur Herstellung eines Rohrs gemäß Teilfigur 1(a), wobei die Vorsprünge und Aussparungen jeweils puzzleteilförmig ausgebildet sind.

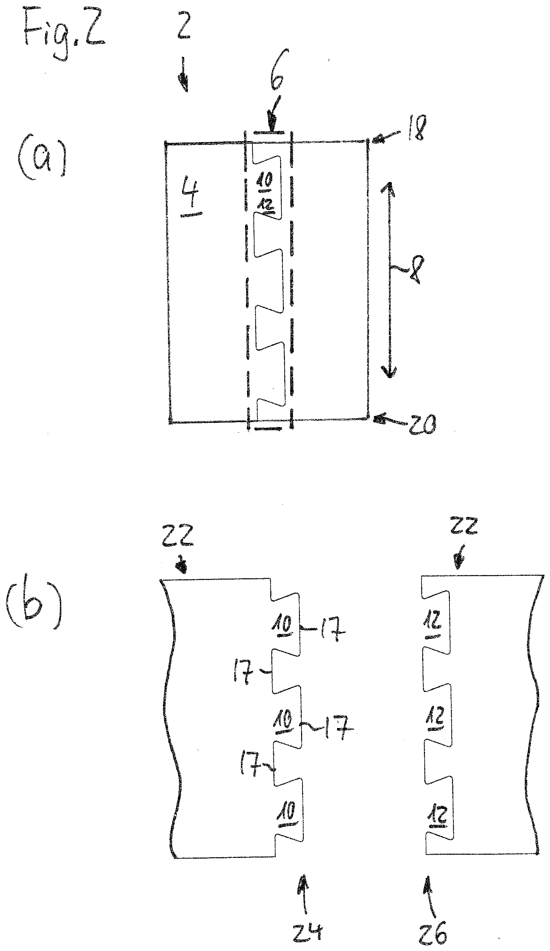

Figur 2, zeigt anhand ihrer Teilfigur 2(a) eine Seitenansicht eines Rohrs, bei dem Vorsprünge und Aussparungen entlang eines Verbindungsabschnitts ineinander eingreifen, und anhand ihrer Teilfigur 2(b) zwei metallische Flachmaterialien mit Vorsprüngen an einer ersten Längskante und mit Aussparungen an einer zweiten Längskante, zur Herstellung eines Rohrs gemäß Teilfigur 2(a), wobei die Vorsprünge und Aussparungen jeweils schwalbenschwanzförmig ausgebildet sind.

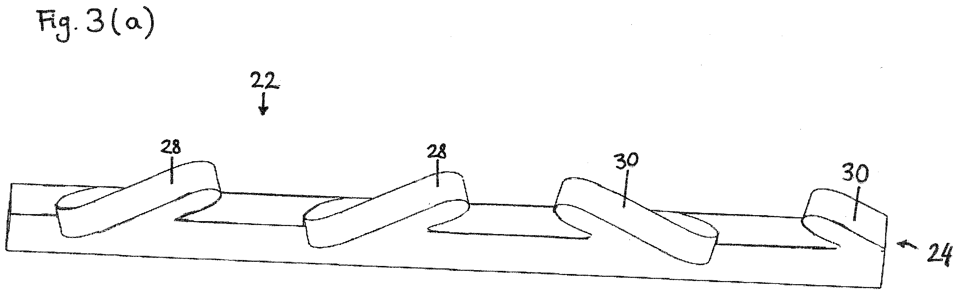

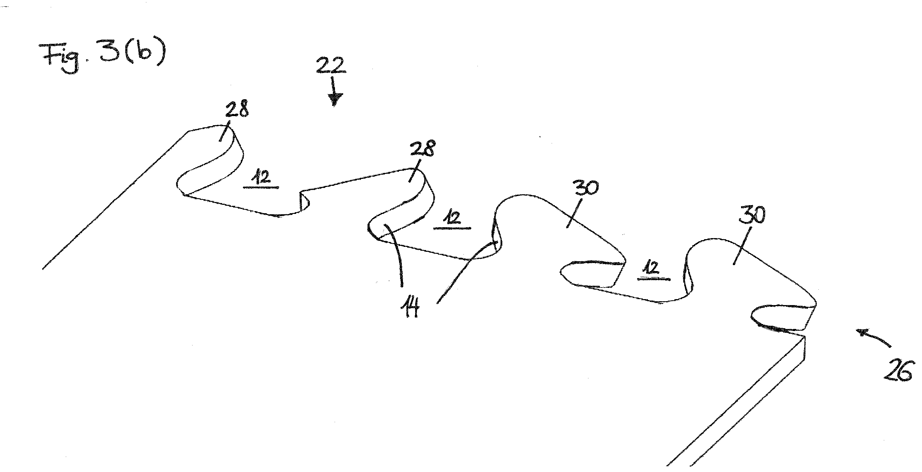

Figur 3 zeigt anhand ihrer Teilfigur 3(a) eine perspektivische Ansicht auf die erste Längskante des metallischen Flachmaterials aus Figur 1(b), wobei die Vorsprünge, in Vordersicht auf die Längskante gesehen, jeweils einen geraden Verlauf haben, der einen Winkel mit der Ebene des Hauptkörpers des metallischen Flachmaterials einschließt, und wobei Vorsprünge mit erster Verlaufsrichtung und Vorsprünge mit zweiter Verlaufsrichtung vorgesehen sind; und anhand ihrer Teilfigur 3(b) eine perspektivische Ansicht auf eine zweite Längskante des metallischen Flachmaterials aus Figur 1(b), wobei die Vorsprünge, in Vordersicht auf die Längskante gesehen, jeweils einen geraden Verlauf haben, der einen Winkel mit der Ebene des Hauptkörpers des metallischen Flachmaterials einschließt, und wobei Vorsprünge mit erster Verlaufsrichtung und Vorsprünge mit zweiter Verlaufsrichtung vorgesehen sind.

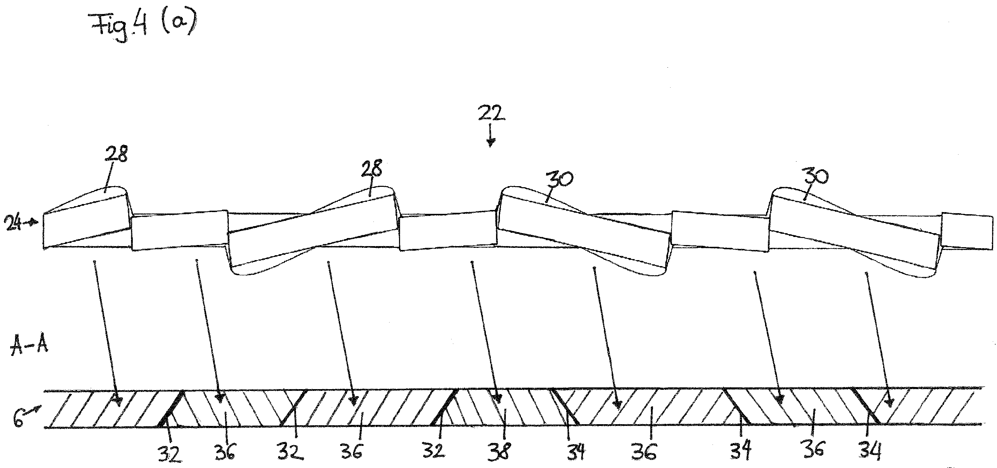

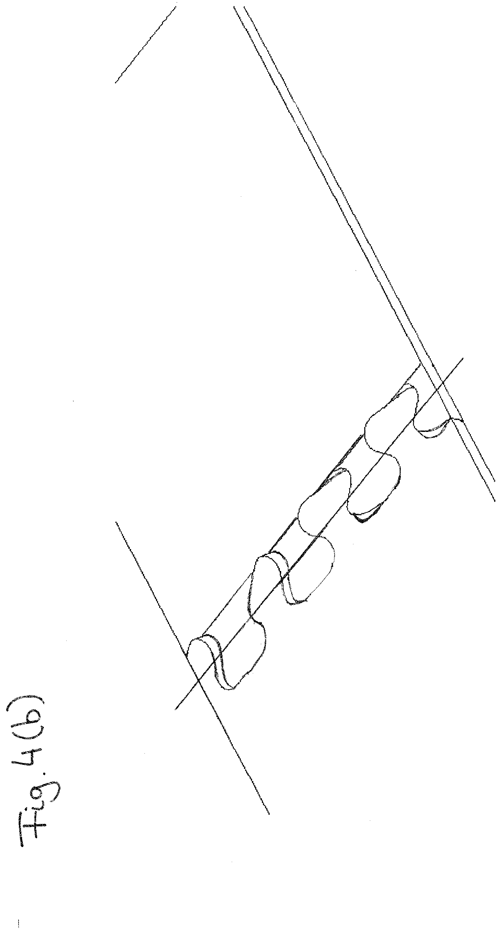

Figur 4 zeigt anhand ihrer Teilfigur 4(a) eine Prinzipskizze einer ersten Längskante des metallischen Flachmaterials aus Figur 1(b) und Figur 3(a) und die Form und Anordnung der Vorsprünge und der Aussparungen sowie der Vorsprungsflanken und der Aussparungsflanken in einer Schnittebene entlang des Verbindungsabschnitts, nach erfolgtem Fügen und Umformen der Vorsprünge und Aussparungen zu einem geschlossenen Verbindungsabschnitt des Rohrs, wie in Figur 1(a) dargestellt; und anhand ihrer Teilfigur 4(b) den Zustand, bei dem die Vorsprünge und Aussparungen der beiden Längskanten miteinander gefügt worden sind, zur Bildung eines geschlossenen Verbindungsabschnitts, jedoch vor dem Verfahrensschritt des Umformens der Vorsprünge in die Ebene, insbesondere in die Tangentialebene des Verbindungsabschnitts.

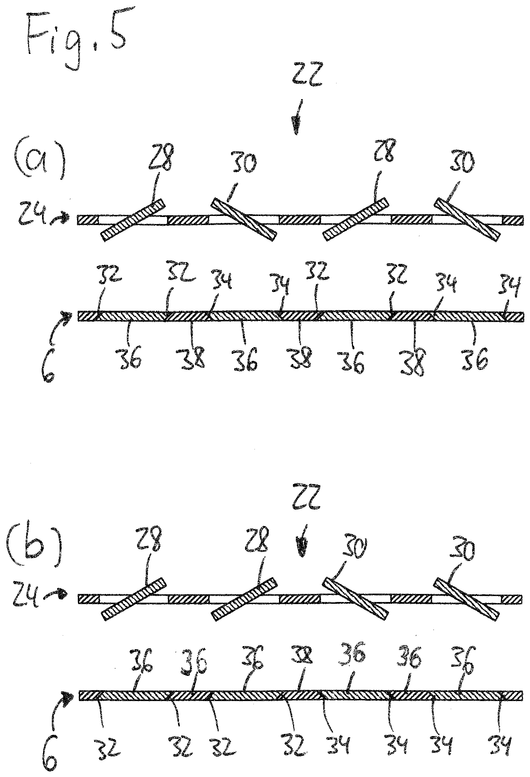

Figur 5 zeigt jeweils eine Prinzipskizze mit einer Vorderansicht auf eine erste Längskante eines metallischen Flachmaterials und eine Schnittansicht entlang einer axialen, entlang des Verbindungsabschnitts verlaufenden Schnittebene nach erfolgtem Fügen und Umformen der Vorsprünge und Aussparungen zu einem geschlossenen Verbindungsabschnitt eines dünnwandigen Rohrs, mit einer ersten abwechselnden Reihenfolge der Verlaufsrichtungen der Vorsprünge (Teilfigur 5(a)); und mit einer zweiten paarweise abwechselnden Verlaufsrichtung der Vorsprünge Teilfigur 5(b) .

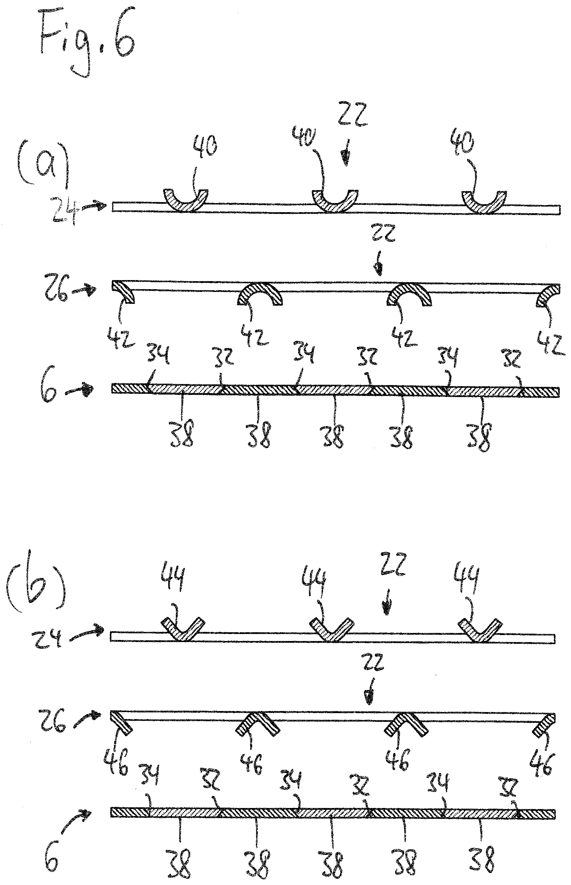

Figur 6(a) zeigt eine Prinzipskizze mit einer oberen Vorderansicht auf eine erste Längskante eines metallischen Flachmaterials mit jeweils U-förmig ausgebildeten Vorsprüngen, darunter eine zweite Vorderansicht auf eine zweite Längskante eines metallischen Flachmaterials mit Vorsprüngen mit der Gestalt eines umgekehrten U und darunter eine Schnittansicht entlang einer axialen, entlang des Verbindungsabschnitts des Rohrs verlaufenden Schnittebene nach erfolgtem Fügen und Umformen der Vorsprünge und Aussparungen zu einem Rohr, und
Figur 6(b) zeigt eine Prinzipskizze mit einer oberen Vorderansicht auf eine erste Längskante eines metallischen Flachmaterials mit jeweils V-förmig ausgebildeten Vorsprüngen, darunter eine zweite Vorderansicht auf eine zweite Längskante eines metallischen Flachmaterials mit Vorsprüngen mit der Gestalt eines umgekehrten V und darunter eine Schnittansicht entlang einer axialen, entlang des Verbindungsabschnitts des Rohrs verlaufenden Schnittebene nach erfolgtem Fügen und Umformen der Vorsprünge und Aussparungen zu einem Rohr.

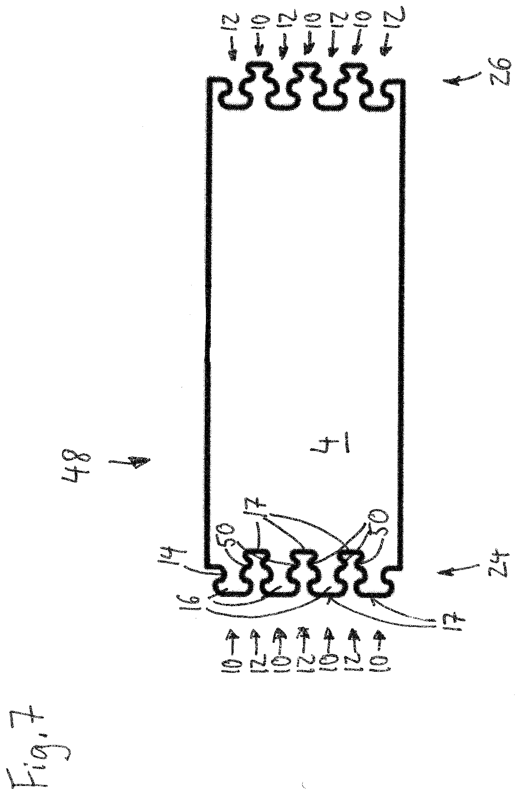

Figur 7 zeigt ein metallisches Flachmaterial mit einer ersten Längskante und mit einer zweiten Längskante und mit an beiden Längskanten abwechselnd angeordneten Vorsprüngen und Aussparungen.

In der Seitenansicht von Figur 1(a) ist ein Rohr 2 gemäß einem Ausführungsbeispiel der vorliegenden Erfindung gezeigt, das aus einem metallischen Flachmaterial 22, z. B. durch Rollen oder Biegen, so hergestellt worden ist, dass das metallische Flachmaterial 22 den Mantel 4 des Rohrs 2 bildet und dass die Verbindungselemente 10, 12 an den Längskanten 24, 26 durch formschlüssiges Ineinandergreifen entlang eines in Rohrlängsrichtung 8 erstreckenden Verbindungsabschnitts 6 miteinander verbunden sind.

Figur 1(b) zeigt das Ausgangsmaterial für das in Figur 1(a) gezeigte Rohr 2, nämlich ein metallisches Flachmaterial 22. Dabei kann es sich um ein Blechmaterial (kurz gesprochen auch Blech) aus Stahl, Aluminium oder Edelstahl oder um ein Band aus Stahl, Aluminium oder Edelstahl handeln, dass insbesondere verzinkt sein kann. Auch Buntmetall-Legierungen wie CuSn oder CuZn sind gut geeignet. Dieses metallische Flachmaterial 22 weist eine erste Längsseite/Längskante 24 und eine der ersten Längsseite/Längskante 24 gegenüber liegende zweite Längsseite/Längskante 26 auf.

In Figur 1(b) sind zwei metallische Flachmaterialien 22 nebeneinander dargestellt. Bei dem ersten metallischen Flachmaterial 22, in Figur 1(b) links dargestellt, ist nur die rechte Längskante erkennbar, die vorstehend als erste Längskante 24 bezeichnet wird. Die zweite Längskante 26 kann man sich links gegenüber der ersten Längskante 24 vorstellen. Bei dem zweiten, in Figur 1(b) rechts angeordneten metallischen Flachmaterial 22 ist nur die linke Längskante zu erkennen, die hier als zweite Längskante 26 bezeichnet wird. Die erste Längskante kann man sich rechts gegenüberliegend der zweiten Längskante 26 vorstellen.

Die erste Längskante 24 weist ein Muster von Vorsprüngen 10 und dazwischenliegenden Aussparungen 12 auf. Ebenso weist die zweite Längskante 26 ein Muster von Aussparungen 12 und dazwischen ausgebildeten Vorsprüngen 10 auf. Wie in Figur 1 gut zu erkennen, haben sowohl die Vorsprünge 10 als auch die Aussparungen 12 eine jeweils gerundete, puzzleteilartige Form, mit einem Halsabschnitt 14 geringerer Breite und mit einem Kopfabschnitt 16 größerer Breite.

Zwischen zwei einander gegenüberliegenden Halsabschnitten 14 verringerter Breite derselben Aussparung 12 ist jeweils ein hinterer Stirnseitenbereich 17 ausgebildet.

Ebenso ist an derjenigen Seite des Vorsprungs 10, die der jeweils gegenüberliegenden Längskante zugewandt ist, ein vorderer Stirnseitenbereich 17 des Vorsprungs 10 ausgebildet.

Wie in Figur 1(b) gut zu erkennen ist, entspricht, in Längsrichtung entlang der ersten bzw. zweiten Längskante 24, 26 gesehen, die Position der Vorsprünge 10 an der ersten Längskante 24 jeweils der Position der Aussparungen 12 an der zweiten Längskante 26, und ebenso entspricht die Position der Aussparungen 12 an der ersten Längskante 24 jeweils der Position der Vorsprünge 10 an der zweiten Längskante 26. Auch die Gestalt der Vorsprünge 10 und Aussparungen 12 an der ersten Längskante 24 entspricht jeweils der Gestalt der Aussparungen 12 und der Vorsprünge 10 an der zweiten Längskante 26.

Insbesondere entspricht die Tiefe der Vorsprünge 10 und der Aussparungen 12 an der ersten Längskante 24 der Tiefe der Aussparungen 12 und der Vorsprünge 10 an der zweiten Längskante 26, jeweils gesehen in links-rechts-Richtung der Zeichenebene in Figur 1(b).

Die Breite der Vorsprünge 10 an der ersten Längskante 24 ist jeweils mit etwas Übermaß gegenüber der Breite der korrespondierenden Aussparungen 12 an der zweiten Längskante 26 ausgebildet, insbesondere mit einem Übermaß an 0,05 - 1,0 mm, jeweils gesehen in Längsrichtung der jeweiligen Längskante 24, 26, also in Figur 1(b) in oben-unten-Richtung der Zeichenebene. Gleiches gilt für die Breite der Vorsprünge 10 an der zweiten Längskante 26. Diese sind ebenfalls mit einem Übermaß von insbesondere 0,05 - 1,0 mm gegenüber den korrespondierenden Aussparungen 12 an der ersten Längskante 24 ausgebildet.

Bei der Herstellung des dünnwandigen Rohrs 2, wie in Figur 1(a) gezeigt, aus dem metallischen Flachmaterial 22, wie in Figur 1(b) gezeigt, wird das metallische Flachmaterial 22 zu einem Rohr 2 gebogen, unter Verwendung eines Dorns oder Mittelstücks, um das das Rohr insbesondere gerollt oder gebogen wird, und unter Verwendung eines von außen dagegen drückenden Blocks oder Gegenstücks.

Dabei werden die Längskanten 24 und 26 so miteinander gefügt, dass die Verbindungselemente, also die Vorsprünage 10 und die Aussparunagen 12 entlang des in Figur 1(a) gezeigten Verbindungsabschnitts 6, der sich in Rohrlängsrichtung erstreckt, jeweils formschlüssig ineinandergreifen.

Die Vorsprünge 10, insbesondere wenigstens die Vorsprünge 10 an einer der beiden Längskanten 24 und 26, sind dabei wenigstens bereichsweise bzgl. der Ebene des Hauptkörpers des metallischen Flachmaterials 22 gebogen, wie dies in den Figuren 3 bis 6 gut zu sehen ist.

Bei dem Fügen der Längskanten 24 und 26 werden die Vorsprünge 10 unter Verwendung des Dorns oder Mittelstücks und des von außen drückenden Blocks oder Gegenstücks in die Ebene, insbesondere Tangentialebene des Verbindungsabschnitts 6 gebogen und zwar so, dass ein Paar aus einer Vorsprungsflanke der Vorsprünge 10 und der jeweils daran anliegenden Aussparungsflanke der korrespondierenden Aussparung 12 in einer axialen, entlang des Verbindungsabschnitts 6 verlaufenden Schnittebene gesehen, jeweils einen schrägen Verlauf von Rohraußenwand zu Rohrinnenwand aufweist, und/oder einen Winkel von 15 - 75°, insbesondere 30 - 60° mit der Rohrradialebene einschließt. Dies ist mit Bezug auf die Figuren 4 bis 6 gut zu erkennen.

Das in Figur 2(a) gezeigte Rohr 2 und das in Figur 2(b) gezeigte Flachmaterial 22 bzw. die Flachmaterialien 22 entsprechen jeweils dem in Figur 1(a) gezeigten Rohrs 2 und dem in Figur 1(b) gezeigten Flachmaterials 22 bzw. den Flachmaterialien 22, wobei die Vorsprünge 10 und die Aussparungen 12 jeweils eine andere Gestalt aufweisen, nämlich die Gestalt eines Schwalbenschwanzes.

Gleiche Elemente sind mit gleichen Bezugszeichen gekennzeichnet und werden zur Vermeidung von Wiederholungen nicht noch einmal beschrieben.

Die Vorsprünge 10 haben jeweils eine Vorsprungsflanke mit geradem Verlauf, der insbesondere einen Winkel mit der Längserstreckungsrichtung des metallischen Flachmaterials 22 bzw. der metallischen Flachmaterialien 22 einschließt, also mit einer Ebene, die in links-rechts-Richtung und orthogonal durch die Zeichenebene verläuft. Dieser Winkel kann z.B. 10 bis 40° sein. Im vorliegenden Ausführungsbeispiel ist er etwa 20°.

An der Rückseite von jeweils zwei benachbarten Vorsprungsflanken schließt sich jeweils ein in Rohrlängsrichtung 8, also in Figur 2(b) in oben-unten-Richtung orthogonal durch die Zeichenebene verlaufender hinterer Stirnseitenbereich 17 an, der die beiden benachbarten Vorsprungsflanken miteinander verbindet. Ebenso ist bei jedem Vorsprung 10 zwischen den vorderen Enden der Vorsprungsflanken jeweils ein vorderer Stirnseitenbereich 17 gebildet, der ebenfalls in einer oben-unten-Richtung in Figur 2(b) bzw. in Rohrlängsrichtung 8 in Figur 2(a) gezeigt verläuft.

Auch in Figur 2 sind die Vorsprünge 10 an einer Längskante 24, 26 jeweils mit einem Übermaß von insbesondere 0,05 - 1,0 mm in Breitenrichtung also in oben-unten-Richtung gemäß Figur 2(b) bzgl. den korrespondierenden Aussparungen 12 an der jeweils gegenüberliegenden Längskante 26, 24 ausgebildet.

Das Herstellungsverfahren des dünnwandigen Rohrs 2 gemäß Figur 2(a) aus dem metallischen Flachmaterial 22 bzw. den metallischen Flachmaterialien 22 aus Figur 2(b) wird so durchgeführt, wie dies mit Bezug auf Figur 1 beschrieben worden ist. Dies wird zur Vermeidung von Wiederholungen nicht noch einmal wiederholt.

In Figur 3(a) und in Figur 3(b) sind die Vorsprünge entlang der ersten Längskante 24 und die Vorsprünge entlang der zweiten Längskante 26 als Vorsprünge 28 mit erster schräger Verlaufsrichtung und als Vorsprünge 30 mit zweiter schräger Verlaufsrichtung ausgebildet.

Dabei ist gut zu erkennen, dass der Kopfabschnitt der Vorsprünge 28 und 30 in Vordersicht auf die Längskante 24 oder 26 gesehen, einen wenigstens bereichsweise geraden Verlauf hat und einen Winkel mit der Ebene des Hauptkörpers des metallischen Flachmaterials 22 einschließt, insbesondere einen Winkel von 10 - 30°, in dem vorliegenden Ausführungsbeispiel von etwa 20°.

Der Halsabschnitt 14, der den Hauptkörper des metallischen Flachmaterials mit dem jeweiligen Kopfabschnitt des Vorsprungs 28, 30 verbindet, kann dabei entweder noch im Wesentlichen in der Ebene des Hauptkörpers des metallischen Flachmaterials liegen, oder er kann einen Biegungs-Übergangsbereich ausbilden, in dem ein Übergang von der Ebene des Hauptkörpers des metallischen Flachmaterials 22 zu dem gebogenen Kopfabschnitt des jeweiligen Vorsprungs 28, 30 erfolgt.

Wiederum, aber weniger gut zu erkennen als in Figur 1, sind die Vorsprünge 28, 30 an einer Längskante 24, 26 jeweils mit Übermaß in Breitenrichtung gegenüber den Aussparungen 12 an der jeweils gegenüberliegenden Längskante 26, 24 ausgebildet.

In der Zusammenschau der Figuren 3(a) und 3(b) ist jedoch gut erkennbar, dass von links nach rechts und somit in Längsrichtung entlang des Verbindungsabschnitts 6 bzw. in Rohrlängsrichtung gesehen, an Positionen, bei denen an der zweiten Längskante 26 ein Vorsprung 28, 30 angeordnet ist, bei der ersten Längskante 24 jeweils eine Aussparung 12 positioniert ist und an Positionen, bei denen bei der ersten Längskante 24 jeweils ein Vorsprung 28, 30 ausgebildet ist, bei der zweiten Längskante 26 jeweils eine Aussparung 12 liegt.

Figur 4(a) zeigt untereinander eine Vordersicht auf die erste Längskante 24 gemäß Figur 3(a) und eine Schnittansicht entlang der Schnittebene A-A gemäß Figur 4(b), die in Rohrlängsrichtung durch den Verbindungsabschnitt 6 gemäß Figur 1(a) verläuft.

Durch die Schrägstellung der Vorsprünge 28 und 30 und durch das Fügen der den Vorsprünge 28 und 30 an den Längskanten 24 und 26 mit den korrespondierenden Aussparungen 12 an der jeweils gegenüberliegenden Längskante 26 und 24 erhält man einen geschlossenen Rohr-Verbindungsbereich 6, bei dem die Vorsprünge 28 und 30 jeweils formschlüssig in die jeweils korrespondierenden Aussparungen 12 eingreifen, und bei dem die Flanken der Vorsprünge 28, 30 und der Aussparungen 12 jeweils eine Reihenfolge und Verlaufsrichtung der Paare von Vorsprungsflanke und daran anliegender Aussparungsflanke haben, wie dies in Figur 4(a), unten, gezeigt ist. Dies wird erreicht durch die Schrägstellung der Vorsprünge 28 und 30 und durch das Biegen derselben in die Ebene, insbesondere Tangentialebene des Verbindungsabschnitts 6 beim Fügen. Unterstützt wird dies durch die Ausbildung der Vorsprünge 28, 30 mit Übermaß bzgl. den jeweils korrespondierenden Aussparungen 12.

Wie in Figur 4(a), unten, entlang der Schnittebene A-A des Verbindungsabschnitts 6 zu erkennen ist, sind an Positionen, an denen Vorsprünge 28 mit erster schräger Verlaufsrichtung in die Ebene des Verbindungsabschnitts 6 gebogen worden sind, jeweils Paare 32 aus Vorsprungsflanke und daran anliegender Aussparungsflanke mit erster schräger Verlaufsrichtung, entstanden. An Positionen, an denen Vorsprünge 30 mit zweiter schräger Verlaufsrichtung in die Ebene des Verbindungsabschnitts 6 gebogen worden sind, sind jeweils Paare 34 aus Vorsprungsflanke und daran anliegender Aussparungsflanke mit gegenläufiger zweiter schräger Verlaufsrichtung, entstanden.

Die erste schräge Verlaufsrichtung verläuft, von Rohrinnenseite zu Rohraußenseite gesehen, schräg nach rechts, also in Richtung zu dem in Fig. 4 (a) rechts gelegenes Rohrende.

Die gegenläufige zweite schräge Verlaufsrichtung verläuft, von Rohrinnenseite zu Rohraußenseite gesehen, schräg nach links, also in Richtung zu dem in Fig. 4 (a) links gelegenem Rohrende.

Entlang des Verbindungsabschnitts 6 ergibt sich somit eine Reihenfolge von jeweils vier Paaren 32 aus jeweils einer Vorsprungsflanke und einer daran anliegenden Aussparungsflanke, mit erster schräger Verlaufsrichtung, woran sich jeweils vier Paare 34 aus jeweils einer Vorsprungsflanke und einer daran anliegenden Aussparungsflanke, mit jeweils gegenläufiger zweiter schräger Verlaufsrichtung anschließen.

Bei einer form- bzw. gestaltsmäßigen Betrachtung des Musters in der Schnittebene A-A ergibt sich eine Abfolge von drei parallelogrammförmigen Vorsprüngen 36 jeweils mit Verlaufsrichtung schräg nach rechts außen, also in Richtung rechtes Rohrende, von einem trapezförmigen Vorsprung 38 mit breiterer Innenseite, von drei parallelogrammförmigen Vorsprünge 36 jeweils mit Verlaufsrichtung schräg nach links außen, also in Richtung linkes Rohrende, von einem trapezförmigen Vorsprung 38 mit breiterer Außenseite, usw.

Dieses Muster ergibt sich bei einer Abfolge von jeweils zwei Vorsprüngen mit erster schräger Verlaufsrichtung 28 und jeweils zwei Vorsprüngen mit zweiter schräger Verlaufsrichtung 30 beim zugrunde liegenden metallischen Flachmaterial 22.

Gemäß Figur 5 (a) sind beim metallischen Flachmaterial 22 entlang der ersten Längskante 24 gesehen Vorsprünge 28 mit erster schräger Verlaufsrichtung und Vorsprünge 30 mit zweiter schräger Verlaufsrichtung jeweils abwechselnd angeordnet. Beim Fügen derselben zu einem geschlossenen Verbindungsabschnitt 6 unter Biegen der Vorsprünge 28 und 30 in die Ebene des Verbindungsabschnitts 6 ergibt sich die Reihenfolge der Paare aus Vorsprungsflanke und daran anliegender Aussparungsflanke wie in Figur 5(a) gezeigt, nämlich jeweils zwei Flankenpaare 32 mit erster schräger Verlaufsrichtung, jeweils zwei Flankenpaare 34 mit gegenläufiger zweiter schräger Verlaufsrichtung, wiederum zwei Flankenpaare 32 mit erster schräger Verlaufsrichtung usw.

Bei einer form- bzw. gestaltsmäßigen Betrachtung des Musters in der Schnittebene A-A ergibt sich folgende Abfolge: Ein parallelogrammförmiger Vorsprung 36 mit schräger Verlaufsrichtung nach außen in Richtung rechtem Rohrende, ein trapezförmiger Vorsprung 38 mit breiterer Innenseite, ein parallelogrammförmiger Vorsprung 36 mit schräger Verlaufsrichtung nach außen in Richtung linkes Rohrende 18, ein trapezförmiger Vorsprung 38 mit breiter Außenseite. Dieser form- bzw. gestaltungsmäßige Abfolge wiederholt sich so lange, wie der geschlossene Verbindungsabschnitt 6 aus einer abwechselnden Reihenfolge von Vorsprüngen 28 mit erster schräger Verlaufsrichtung und Vorsprüngen 30 mit zweiter schräger Verlaufsrichtung entstanden ist.

Das Muster der Vorsprünge 28, 30 entlang der ersten Längskante 24 und der Flankenpaare 32, 34 sowie die Abfolge der parallelogrammförmigen Vorsprünge 36 und der trapezförmigen Vorsprünge 38 gemäß Figur 5(b) entspricht dem in Bezug auf Figur 4(a) gezeigten Muster.

Es sind entlang der ersten Längskante 24 jeweils abwechselnd zwei Vorsprünge 28 mit erster schräger Verlaufsrichtung und zwei Vorsprünge 30 mit zweiter schräger Verlaufsrichtung 30 vorgesehen. Daraus ergibt sich ein Flankenpaarverlauf entlang des geschlossenen Verbindungsabschnitts 6 in Rohrlängsrichtung 8 wie folgt: Abwechselnd jeweils vier Flankenpaare 32 mit erster Verlaufsrichtung und vier Flankenpaare 34 mit jeweils gegenläufiger zweiter schräger Verlaufsrichtung. In formmäßiger bzw. gestaltmäßiger Hinsicht ist folgende Abfolge vorhanden: Drei parallelogrammförmige Vorsprünge 36 mit erster schräger Verlaufsrichtung in Rohrradialrichtung schräg nach außen mit Richtung auf das rechte Rohrende (von denen der mittlere parallelogrammförmige Vorsprung 36 eine geringere Breite hat als die beiden diesen einschließenden parallelogrammförmigen Vorsprünge 36), ein trapezförmiger Vorsprung 38 mit breiterer Innenseite, drei parallelogrammförmige Vorsprünge 36 mit zweiter gegenläufiger schräger Verlaufsrichtung in Rohrradialrichtung nach außen in Richtung linkes Rohrende (von denen der mittlere parallelogrammförmige Vorsprung 36 eine geringere Breite hat als die beiden diesen einschließenden parallelogrammförmigen Vorsprünge 36), anschließend ein trapezförmiger Vorsprung 38 mit breiterer Außenseite. Dieses Muster wiederholt sich solange, wie es aus einer Abfolge von jeweils zwei Vorsprüngen 28 mit erster schräger Verlaufsrichtung und zwei Vorsprüngen 30 mit zweiter schräger Verlaufsrichtung entlang der ersten Längskante 24 entstanden ist.

Die Breite der Vorsprünge 36 und 38 ist dabei von der Lage der Schnittebene in Breitenrichtung durch den Verbindungsbereich 6 bzw. durch die Längskanten 24, 26 abhängig. Bei einem Verschieben der Schnittebene in Breitenrichtung innerhalb des Verbindungsbereichs 6 ändert sich auch die Breite der Vorsprünge 36 und 38. Die Vorsprünge 10 und die Aussparungen 12 können ja eine puzzleteilartige Form (siehe Figur 1), ggf. mit Zwischenkragen 50 (siehe Figur 1), oder eine schwalbenschwanzartige Form (siehe Figur 2) haben.

In der Darstellung gemäß Figur 6(a) haben die Vorsprünge 40, in Vordersicht auf die erste Längskante 24 gesehen, jeweils im Wesentlichen die Form eines U und die Vorsprünge 42, in Vordersicht auf die zweite Längskante 26 gesehen, haben im Wesentlichen die Form eines umgekehrten U. Dabei ist jeweils ein mittlerer Bereich des jeweiligen Vorsprungs 40, 42 in der Ebene des Hauptkörpers des metallischen Flachmaterials 22 angeordnet und die in Längsrichtung entlang der ersten bzw. zweiten Längskante 24, 26 gesehen äußeren Abschnitte der Vorsprünge 40, 42 sind jeweils beide nach oben (Vorsprünge 40) bzw. jeweils beide nach unten (Vorsprünge 42) gebogen, jeweils in Vordersicht auf die Längskante 24, 26 gesehen.

Beim Fügen der Längskanten 24, 26 zu einem geschlossenen Verbindungsabschnitt 6, sodass die Vorsprünge 40 an der ersten Längskante 24 in jeweils gegenüberliegende Aussparungen 12 und Vorsprünge 42 an der zweiten Längskante 26 in jeweils gegenüberliegende Aussparungen 12 der ersten Längskante 24 formschlüssig eingreifen, und beim Verbiegen der Vorsprünge 40, 42 bzw. deren äußerer Abschnitte in die Ebene des Verbindungsabschnitts 6, entsteht ein Verlauf von Flankenpaaren entlang des Verbindungsabschnitts 6, wie in Figur 6 (a), unten, gezeigt. Es wechseln sich jeweils Flankenpaare 32 aus Vorsprungsflanke und Aussparungsflanke mit erster schräger Verlaufsrichtung schräg nach außen Richtung rechtes Rohrende und Flankenpaare 34 aus Vorsprungsflanke und Aussparungsflanke mit zweiter schräger gegenläufiger Verlaufsrichtung schräg nach außen Richtung linkes Rohrende ab.

In form- bzw. gestaltmäßiger Hinsicht wechseln sich trapezförmige Vorsprünge 38 mit breiterer Außenseite und trapezförmige Vorsprünge 38 mit breiterer Innenseite ab.

Auch bei der Figur 6(b) sind die Vorsprünge entlang der ersten und zweiten Längskante 24, 26 einander abwechselnd angeordnet, wobei die Vorsprünge 44 an der ersten Längskante 24 des metallischen Flachmaterials 22 hier die Form eines V aufweisen und die Vorsprünge 46 an der zweiten Längskante 26 jeweils die Form eines umgekehrten V aufweisen. Wiederum ist ein mittlerer Bereich dieser Vorsprünge 44, 46 mit dem Hauptkörper des metallischen Flachmaterials 22 integral verbunden und liegt in der Ebene desselben. Die beiden in Kantenlängsrichtung gesehen äußeren Abschnitte der Vorsprünge 44, 46 erstrecken sich aus der Ebene des metallischen Flachmaterials 22 nach oben (Vorsprünge 44) bzw. nach unten (Vorsprünge 46).

Beim Fügen der Längskanten 24, 26 miteinander zu einem geschlossenen Verbindungsabschnitt 6, sodass die Vorsprünge 44 an der ersten Längskante 24 in korrespondiere Aussparungen 12 an der zweiten Längskante 26 eingreifen und Vorsprünge 46 an der zweiten Längskante 26 in korrespondierende Aussparungen 12 an der ersten Längskante 24 eingreifen, und beim Verbiegen der Vorsprünge 44, 46, insbesondere der äußeren Bereiche der Vorsprünge 44, 46 in die Ebene des Verbindungsabschnitts 6, ergibt sich das Muster bzw. der Flankenpaarverlauf wie in Figur 6(b) unten gezeigt.

Dieser Verlauf entspricht dem entsprechenden Verlauf aus Figur 6(a) und wird hier zur Vermeidung von Wiederholungen nicht noch einmal erläutert.

Figur 7 zeigt ein metallisches Flachmaterial 48 mit einer ersten Längskante 24 und mit einer zweiten Längskante 26 und mit an beiden Längskanten 24, 46 abwechselnd angeordneten Vorsprüngen 10 und Aussparungen 12.

Das metallische Flachmaterial 48 entspricht im Wesentlichen dem in Figur 1(b) dargestellten metallischen Flachmaterial 22, mit den im Folgenden beschriebenen Unterschieden. Gleiche Elemente sind mit gleichen Bezugszeichen gekennzeichnet und werden hier nicht noch einmal erläutert.

Die erste Längskante 24 weist wiederum ein Muster von Vorsprüngen 10 und dazwischen liegenden Aussparungen 12 auf. Ebenso weist die zweite Längskante 26 ein Muster von Vorsprüngen 10 und dazwischen liegenden Aussparungen 12 auf.

Sowohl die Vorsprünge 10 als auch die Aussparungen 12 haben eine gerundete, im Wesentlichen puzzleteilartige Form, mit einem Kopfabschnitt 16 größerer Breite und mit einem Halsabschnitt 14 geringerer Breite, wobei hier in dem Halsabschnitt 14 geringerer Breite noch ein nach außen kragender Zwischenkragen 50 ausgebildet ist, der den Halsabschnitt 14 in einen bodenseitigen ersten Halsabschnittsbereich und in einen kopfseitigen zweiten Halsabschnittsbereich untergliedert.

Wie in Figur 7 gut zu erkennen ist, entspricht, in Längsrichtung entlang der ersten bzw. zweiten Längskante 24, 26 gesehen, die Position der Vorsprünge 10 an der ersten Längskante 24 jeweils der Position der Aussparungen 12 an der zweiten Längskante 26, und ebenso entspricht die Position der Aussparungen 12 an der ersten Längskante 24 jeweils der Position der Vorsprünge 10 an der zweiten Längskante 26.

Auch die Gestalt der Vorsprünge 10 und der Aussparungen 12 an der ersten Längskante 24 entspricht jeweils der Gestalt der Aussparungen 12 und der Vorsprünge 10 an der zweiten Längskante 26.

Wie in Figur 7 gut zu erkennen ist, sind die Kopfabschnitte 16 an der ersten Längskante 24 etwas breiter ausgebildet als die Kopfabschnitte 16 an der zweiten Längskante 26, und die Breite der Aussparungen 12 an der ersten Längskante 24 ist etwas geringer als die Breite der Aussparungen 12 an der zweiten Längskante 26.

Der Verlauf und die Gestalt der Seitenflanken der Halsabschnitte 14 an der ersten Längskante 24 entsprechen jeweils im Wesentlichen dem Verlauf und der Gestalt der Seitenflanken der Halsabschnitte 14 an der zweiten Längskante 26.

Die außen, angrenzend an die jeweilige Querseite des metallischen Flachmaterials 48 gelegenen Halsabschnitte 14 der ersten Seitenkante 24 sind mit geringerer Tiefe und ohne Zwischenkragen ausgebildet. Ebenso sind die außen, angrenzend an die jeweilige Querseite des metallischen Flachmaterials 48 gelegenen Vorsprünge mit geringerer Tiefe und ohne zwischen Zwischenkragen 50 ausgebildet, so dass deren Form und Gestalt einander entsprechen und diese jeweils in einander eingreifen können.

Die Breite der Vorsprünge 10 an der ersten Längskante 24 sind jeweils mit etwas Übermaß gegenüber der Breite der korrespondierenden Aussparungen 12 an der zweiten Längskante 26 ausgebildet, insbesondere mit einem Übermaß an 0,05 - 1,0 mm, jeweils gesehen in Längsrichtung der jeweiligen Längskante 24, 26, also in Figur 7 in oben-unten-Richtung der Zeichenebene. Gleiches gilt für die Breite der Vorsprünge 10 an der zweiten Längskante 26. Diese sind ebenfalls mit einem Übermaß von insbesondere 0,05 - 1,0 mm gegenüber den korrespondierenden Aussparungen 12 an der ersten Längskante 24 ausgebildet.

Zur Herstellung eines dünnwandigen Rohrs aus diesem metallischen Flachmaterial 48 wird auf die Beschreibung zu Figur 1 verwiesen. Dies wird hier nicht noch einmal wiederholt.

Man kann sich gut vorstellen, wie aus dem metallischen Flachmaterial 48 z. B. durch Rollen oder Biegen ein dünnwandiges Rohr hergestellt werden kann, bei dem das metallische Flachmaterial 48 den Mantel des Rohrs bildet und bei dem Verbindungselemente 10, 12 an den Längskanten 24, 26 durch formschlüssiges Ineinandergreifen entlang eines in Rohrlängsrichtung erstreckenden Verbindungsabschnitts miteinander verbunden sind. Bei einem Schnitt entlang einer Schnittebene, analog der Schnittebene A-A gemäß Figur 4(b), die in Rohrlängsrichtung durch den Verbindungsabschnitt verläuft, ergibt sich jeweils ein Schnittbild, wie in den Figuren 4, 5 oder 6, dargestellt. Das konkrete Schnittbild ist abhängig von der Ausbildung der Verbindungselemente 10, 12, insbesondere der Vorsprünge 10, bezüglich der Ebene des Hauptkörpers des metallischen Flachmaterials 48.

Die Vorsprünge und Aussparungen der vorstehenden beschriebenen und in den Figuren 1-7 gezeigten Ausführungsbeispiele können auch kombiniert werden, insbesondere in einer abwechelnden Reihenfolge entlang des sich in Rohrlängsrichtung erstreckenden Verbindungsbereichs.

So können zum Beispiel die puzzleteilförmigen Vorsprünge 10 und Aussparungen 12 der Figur 1, 4 oder 5 mit den Vorsprüngen mit U-Form bzw. mit umgekehrter U Form 40, 42 der Figur 6(a) oder mit den Vorsprüngen mit V-Form bzw. mit umgekehrter V-Form 44, 46 der Figur 6 (b) kombiniert werden.

Weiterhin können die schwalbenschwanzartigen Vorsprünge 10 und Aussparungen 12 der Figur 2 mit den Vorsprüngen mit U-Form bzw. mit umgekehrter U Form 40, 42 der Figur 6(a) oder mit den Vorsprüngen mit V-Form bzw. mit umgekehrter V-Form 44, 46 der Figur 6 (b) kombiniert werden.

Ebenso ist es möglich, die Vorsprünge mit U-Form bzw. mit umgekehrter U Form 40, 42 der Figur 6(a) mit den Vorsprüngen mit V-Form bzw. mit umgekehrter V-Form 44, 46 der Figur 6 (b) zu kombinieren.

Alle diese Kombinationen sind von der vorliegenden Patentanmeldung mit umfasst.

Die im allgemeinen Beschreibungsteil angegebenen Vorteile und technischen Wirkungen treffen für das dünnwandige Rohr, für das metallische Flachmaterial und für das Herstellungsverfahren zu, die vorliegend anhand der Ausführungsbeispiele der Figuren 1 bis 7 beschrieben worden sind. Zur Vermeidung von Wiederholungen werden diese nicht noch einmal aufgeführt.

### Bezugszeichenliste

2 Rohr
4 Mantel
6 Verbindungsabschnitt
8 Rohrlängsrichtung
10 Vorsprünge
12 Aussparungen
14 Halsabschnitt
16 Kopfabschnitt
17 Stirnseitenbereich
18 erstes Rohrende
20 zweites Rohrende
22 metallisches Flachmaterial
24 erste Längskante
26 zweite Längskante
28 Vorsprünge mit erster schräger Verlaufsrichtung
30 Vorsprünge mit zweiter schräger Verlaufsrichtung
32 Flankenpaar mit erster Verlaufsrichtung
34 Flankenpaar mit zweiter Verlaufsrichtung
36 Parallelogramm-förmige Vorsprünge
38 Trapez-förmige Vorsprünge
A-A Schnittebene
40 Vorsprünge mit U-Form
42 Vorsprünge mit umgekehrter U-Form
44 Vorsprünge mit V-Form
46 Vorsprünge mit umgekehrter V-Form
48 metallisches Flachmaterial
50 Zwischenkragen

## Patentansprüche

1. Dünnwandiges Rohr (2), aufweisend die folgenden Merkmale:
ein zu einem Rohr (2) gerolltes oder gebogenes dünnes metallisches Flachmaterial (22), dessen Längskanten (24, 26) durch formschlüssiges Ineinandergreifen von Verbindungselementen entlang eines sich in Rohrlängsrichtung (8) erstreckenden Verbindungsabschnitts (6) miteinander verbunden sind;
wobei das Rohr (2) ein erstes axiales Rohrende (18) und ein zweites axiales Rohrende (20) aufweist;
wobei es sich bei den Verbindungselementen um Vorsprünge (10) an der ersten Längskante (24) des Flachmaterials (22) und korrespondierende Aussparungen (12) an der zweiten Längskante (26) des Flachmaterials (22) handelt; und
wobei wenigstens ein Vorsprung (10) so in eine korrespondierende Aussparung (12) eingreift, dass die Flanken des Vorsprungs (10) in Rohrlängsrichtung (8) wenigstens bereichsweise an den jeweils benachbarten Flanken der korrespondierenden Aussparung (12) anliegen;
**dadurch gekennzeichnet, dass**
das Flachmaterial (22) eine Wandstärke von 0,05 - 1,00 mm hat;
wenigstens ein Paar (32, 34) aus einer Vorsprungsflanke und aus einer daran anliegenden Aussparungsflanke in einer axialen, entlang des Verbindungsabschnitts (6) verlaufenden Schnittebene (A-A) gesehen, jeweils einen schrägen Verlauf von Rohraußenwand zu Rohrinnenwand aufweist und jeweils einen Winkel von 15 - 75°, insbesondere 30 - 60° mit der Rohrradialebene einschließt;
wenigstens ein Paar (32) aus einer Vorsprungsflanke und aus einer daran anliegenden Aussparungsflanke, in einer Schnittebene entlang des Verbindungsabschnitts (6) gesehen, jeweils einen schrägen Verlauf mit einer ersten schrägen Verlaufsrichtung von Rohraußenwand zu Rohrinnenwand in Richtung eines der Rohrenden (20) aufweist;
wenigstens ein Paar (34) aus einer Vorsprungsflanke und aus einer daran anliegenden Aussparungsflanke in einer Schnittebene entlang des Verbindungsabschnitts (6) gesehen, jeweils einen schrägen Verlauf mir einer gegenläufigen zweiten schrägen Verlaufsrichtung von Rohraußenwand zu Rohrinnenwand in Richtung anderes Rohrende (18) aufweist; und
Paare (32) aus einer Vorsprungsflanke und aus einer daran anliegenden Aussparungsflanke mit erster schräger Verlaufsrichtung, entlang des Verbindungsabschnitts (6) gesehen, abwechselnd mit Paaren (34) aus einer Vorsprungsflanke und aus einer daran anliegenden Aussparungsflanke mit gegenläufiger zweiter schräger Verlaufsrichtung angeordnet sind, sodass die Vorsprünge (28, 30) und Aussparungen (12) insbesondere, in einer Schnittebene (A-A) entlang des Verbindungsabschnitts (6) gesehen, abwechselnd im Wesentlichen die Gestalt eines Parallelogramms (36) und im Wesentlichen die Gestalt eines Trapezes (38) aufweisen.

2. Rohr (2) nach Anspruch 1,
wobei die Reihenfolge der Paare (32, 34) aus einer Vorsprungsflanke und aus einer daran anliegenden Aussparungsflanke, entlang des Verbindungsabschnitts (6) gesehen, wenigstens bereichsweise wie folgt ist:
abwechselnd jeweils zwei Paare (32) mit erster schräger Verlaufsrichtung, und jeweils zwei, vier oder sechs Paare (34) mit gegenläufiger zweiter schräger Verlaufsrichtung; oder
abwechselnd jeweils vier Paare (32) mit erster schräger Verlaufsrichtung, und jeweils zwei, vier oder sechs Paare (34) mit gegenläufiger zweiter schräger Verlaufsrichtung;
abwechselnd jeweils sechs Paare (32) mit erster schräger Verlaufsrichtung, und jeweils zwei, vier oder sechs Paare (34) mit gegenläufiger zweiter schräger Verlaufsrichtung.

3. Rohr (2) nach einem der vorhergehenden Ansprüche,
wobei wenigstens ein Vorsprung (10) so in eine korrespondierende Aussparung (12) eingreift, dass die Stirnseite (17) des Vorsprungs (10) wenigstens bereichsweise an der Stirnseite (17) der korrespondierenden Aussparung (12) anliegt; und/oder
wobei die Stirnseiten (17) im Wesentlichen in einer axialen, entlang des Verbindungsabschnitts (6) verlaufenden Ebene liegen.

4. Rohr (2) nach einem der vorhergehenden Ansprüche,
wobei im Anliegebereich wenigstens eines Paars (32, 34) aus einer Vorsprungsflanke und aus einer daran anliegenden Aussparungsflanke ein Wulst, ein Materialanhäufungsbereich oder ein Materialverdickungsbereich gebildet ist.

5. Rohr (2) nach einem der vorhergehenden Ansprüche,
wobei wenigstens ein Vorsprung (10) und/oder wenigstens eine Aussparung (12) einen verjüngten Halsbereich (14) und einen verbreiterten Kopfbereich (16) aufweist; und/oder
wobei wenigstens ein Vorsprung (10) und/oder wenigstens eine Aussparung (12) einen verjüngten Halsbereich (14) und einen verbreiterten Kopfbereich (16) aufweist, mit einem Zwischenkragen (50) im Halsbereich, der den Halsbereich (14) in einen kopfseitigen Aussparungsabschnitt und einen bodenseitigen Aussparungsabschnitt untergliedert; und/oder
wobei wenigstens ein Vorsprung (10) und/oder wenigstens eine Aussparung (12), in Draufsicht gesehen, die Gestalt eines gerundeten Puzzleteilvorsprungs bzw. einer gerundeten Puzzleteilaussparung hat, oder die Gestalt eines Schwalbenschwanzes hat.

6. Metallisches Flachmaterial (22) zur Herstellung eines dünnwandigen Rohrs (2) nach einem der vorhergehenden Ansprüche durch Rollen oder Biegen, aufweisend die folgenden Merkmale:
eine erste Längskante (24) und eine gegenüberliegende zweite Längskante (26),
wobei an der ersten Längskante (24) wenigstens ein als Vorsprung (10) ausgebildetes Verbindungselement und an der zweiten Längskante (26) an einer korrespondierenden Längsposition wenigstens ein korrespondierendes, als Aussparung (12) ausgebildetes Verbindungselement angeordnet sind;
wobei das als Vorsprung (10) ausgebildete Verbindungselement bezüglich der Ebene des Hauptkörpers des metallischen Flachmaterials (22) gebogen ist; und
wobei der Vorsprung (28, 30), in Vordersicht auf die erste Längskante (24) gesehen, einen geraden Verlauf hat und einen Winkel mit der Ebene des Hauptkörpers des metallischen Flachmaterials (22) einschließt;
wobei der Vorsprung (10) mit Übermaß gegenüber der korrespondierenden Aussparung (12) ausgebildet ist; und
wobei die Länge des Vorsprungs (10) im Wesentlichen der Länge der Aussparung (12) entspricht;
wobei wenigstens ein Vorsprung (28) mit erster Verlaufsrichtung und wenigstens ein Vorsprung (30) mit zweiter Verlaufsrichtung vorgesehen sind;
wobei der Vorsprung (28) mit erster Verlaufsrichtung, in Vordersicht auf die erste Längskante (24) gesehen, eine Steigung relativ vom ersten Flachmaterialende zu zweitem Flachmaterialende aufweist; und
wobei der Vorsprung (30) mit zweiter Verlaufsrichtung, in Vordersicht auf die erste Längskante (24) gesehen, eine Steigung relativ vom zweiten Flachmaterialende zu erstem Flachmaterialende aufweist;
wobei
das metallische Flachmaterial (22) eine Wandstärke von 0,05 - 1,00 mm hat; und
die Breite des Vorsprungs (10) um ein Übermaß von 0,05 - 1,0 mm größer ist als die Breite der korrespondierenden Aussparung (12), zur Unterstützung der Bildung eines jeweils schrägen Verlaufs von Vorsprungsflanke zu der jeweils daran anliegenden Aussparungsflanke .

7. Metallisches Flachmaterial (22) nach Anspruch 6,
wobei die Reihenfolge der Vorsprünge (28) mit erster Verlaufsrichtung und der Vorsprünge (30) mit zweiter Verlaufsrichtung, entlang der Längskante (24, 26) gesehen, wenigstens bereichsweise wie folgt ist:
abwechselnd jeweils ein Vorsprung (28) mit erster Verlaufsrichtung und ein bis fünf Vorsprünge (30) mit zweiter Verlaufsrichtung;
abwechselnd jeweils zwei Vorsprünge (28) mit erster Verlaufsrichtung und ein bis fünf Vorsprünge (30) mit zweiter Verlaufsrichtung;
abwechselnd jeweils drei Vorsprünge (28) mit erster Verlaufsrichtung und ein bis fünf Vorsprünge (30) mit zweiter Verlaufsrichtung.

8. Metallisches Flachmaterial (22, 48) nach einem der Ansprüche 6 bis 7,
wobei wenigstens ein Vorsprung (10) und/oder wenigstens eine Aussparung (12) einen verjüngten Halsbereich (14) und einen verbreiterten Kopfbereich (16) aufweist; und/oder
wobei wenigstens ein Vorsprung (10) und/oder wenigstens eine Aussparung (12) einen verjüngten Halsbereich (14) und einen verbreiterten Kopfbereich (16) aufweist, mit einem Zwischenkragen (50) im Halsbereich, der den Halsbereich (14) in einen kopfseitigen Aussparungsabschnitt und einen bodenseitigen Aussparungsabschnitt untergliedert; und/oder
wobei wenigstens ein Vorsprung (10) und/oder wenigstens eine Aussparung (12), in Draufsicht gesehen, die Gestalt eines gerundeten Puzzleteilvorsprungs bzw. einer gerundeten Puzzleteilaussparung hat, oder die Gestalt eines Schwalbenschwanzes hat.

9. Verfahren zum Herstellen eines dünnwandigen Rohrs (2) nach einem der Ansprüche 1 bis 5, aufweisend die folgenden Schritte:
Bereitstellen eines metallischen Flachmaterials (22) nach einem der Ansprüche 6 bis 8;
Rollen oder Biegen des metallischen Flachmaterials (22) zu einem dünnwandigen Rohr (2), unter Verwendung eines Dorns oder Mittelstücks und eines von außen dagegen drückenden Blocks oder Gegenstücks; und
Fügen der Längskanten (24, 26) so miteinander,
dass die Verbindungselemente entlang eines sich in Rohrlängsrichtung (8) erstreckenden Verbindungsabschnitts (6) formschlüssig ineinandergreifen; und
dass das wenigstens eine als Vorsprung (10) ausgebildete Verbindungselement, das wenigstens bereichsweise bezüglich der Ebene des Hauptkörpers des metallischen Flachmaterials (22) gebogen ist, so in die Ebene des Verbindungsabschnitts (6) gebogen wird, dass das Paar aus der Vorsprungsflanke dieses Vorsprungs (10) und aus der daran anliegenden Aussparungsflanke in einer axialen, entlang des Verbindungsabschnitts (6) verlaufenden Schnittebene (A-A) gesehen, jeweils einen schrägen Verlauf von Rohraußenwand zu Rohrinnenwand aufweist und/oder einen Winkel von 15 - 75°, insbesondere 30 - 60°mit der Rohrradialebene einschließt;
wobei dadurch, dass die Breite des Vorsprungs (10) um ein Übermaß von 0,05 - 1,0 mm größer ist als die Breite der korrespondierenden Aussparung (12) die Bildung eines jeweils schrägen Verlaufs von Vorsprungsflanke zu der jeweils daran anliegenden Aussparungsflanke unterstützt wird;
wobei ein Paar (32) aus einer Vorsprungsflanke und aus einer daran anliegenden Aussparungsflanke, in einer Schnittebene entlang des Verbindungsabschnitts (6) gesehen, jeweils einen schrägen Verlauf mit einer ersten schrägen Verlaufsrichtung von Rohraußenwand zu Rohrinnenwand in Richtung eines der Rohrenden (20) aufweist;
wobei ein Paar (34) aus einer Vorsprungsflanke und aus einer daran anliegenden Aussparungsflanke in einer Schnittebene entlang des Verbindungsabschnitts (6) gesehen, jeweils einen schrägen Verlauf mir einer gegenläufigen zweiten schrägen Verlaufsrichtung von Rohraußenwand zu Rohrinnenwand in Richtung anderes Rohrende (18) aufweist; und
wobei Paare (32) aus einer Vorsprungsflanke und aus einer daran anliegenden Aussparungsflanke mit erster schräger Verlaufsrichtung, entlang des Verbindungsabschnitts (6) gesehen, abwechselnd mit Paaren (34) aus einer Vorsprungsflanke und aus einer daran anliegenden Aussparungsflanke mit gegenläufiger zweiter schräger Verlaufsrichtung angeordnet sind, sodass die Vorsprünge (28, 30) und Aussparungen (12) insbesondere, in einer Schnittebene (A-A) entlang des Verbindungsabschnitts (6) gesehen, abwechselnd im Wesentlichen die Gestalt eines Parallelogramms (36) und im Wesentlichen die Gestalt eines Trapezes (38) aufweisen.

## Claims

1. Thin-walled pipe (2), comprising the following features:
a thin metallic flat material (22) rolled or bent into a pipe (2), the longitudinal edges (24, 26) of which are connected to one another by positive interengagement of connecting elements along a connecting portion (6) extending in the pipe longitudinal direction (8);
wherein the pipe (2) has a first axial pipe end (18) and a second axial pipe end (20);
wherein the connecting elements are protrusions (10) on the first longitudinal edge (24) of the flat material (22) and corresponding recesses (12) on the second longitudinal edge (26) of the flat material (22); and
wherein at least one protrusion (10) engages in a corresponding recess (12) in such a way that the flanks of the protrusion (10) abut at least partially against the respective adjacent flanks of the corresponding recess (12) in the pipe longitudinal direction (8);
**characterized in that**
the flat material (22) has a wall thickness of 0.05 - 1.00 mm;
at least one pair (32, 34) of a protrusion flank and of an abutting recess flank, as seen in an axial sectional plane (A-A) extending along the connecting portion (6), in each case has an inclined course from pipe outer wall to pipe inner wall and in each case encloses an angle of 15 - 75°, in particular 30 - 60°, with the pipe radial plane;
at least one pair (32) of a protrusion flank and of an abutting recess flank, as seen in a sectional plane along the connecting portion (6), in each case has an inclined course with a first oblique direction of extension from the pipe outer wall to the pipe inner wall in the direction of one of the pipe ends (20);
at least one pair (34) of a protrusion flank and of an abutting recess flank, as seen in a sectional plane along the connecting portion (6), in each case has an inclined course with an opposite second oblique direction of extension from the pipe outer wall to the pipe inner wall in the direction of the other pipe end (18); and
pairs (32) of a protrusion flank and of an abutting recess flank with a first oblique direction of extension, as seen along the connecting portion (6), are arranged alternately with pairs (34) of a protrusion flank and of an abutting recess flank with an opposite second oblique direction of extension, so that the protrusions (28, 30) and recesses (12), as seen in a sectional plane (A-A) along the connecting portion (6), in particular alternately have substantially the shape of a parallelogram (36) and substantially the shape of a trapezoid (38).

2. Pipe (2) according to claim 1,
wherein the sequence of the pairs (32, 34) of a protrusion flank and of an abutting recess flank, as seen along the connecting portion (6), is at least in portions as follows:
alternately two pairs (32) each with a first oblique direction of extension, and two, four or six pairs (34) each with an opposite second oblique direction of extension; or
alternately four pairs (32) each with a first oblique direction of extension, and two, four or six pairs (34) each with an opposite second oblique direction of extension;
alternately six pairs (32) each with a first oblique direction of extension, and two, four or six pairs (34) each with an opposite second oblique direction of extension.

3. Pipe (2) according to any of the preceding claims,
wherein at least one protrusion (10) engages in a corresponding recess (12) in such a way that the end face (17) of the protrusion (10) at least partially abuts against the end face (17) of the corresponding recess (12); and/or
wherein the end faces (17) lie substantially in an axial plane extending along the connecting portion (6).

4. Pipe (2) according to any of the preceding claims,
wherein a bead, a material accumulation portion or a material thickening portion is formed in the abutting area of at least one pair (32, 34) of a protrusion flank and of a recess flank abutting thereon.

5. Pipe (2) according to any of the preceding claims,
wherein at least one protrusion (10) and/or at least one recess (12) has a tapered neck portion (14) and a widened head portion (16); and/or
wherein at least one protrusion (10) and/or at least one recess (12) has a tapered neck portion (14) and a widened head portion (16), with an intermediate collar (50) in the neck portion, which subdivides the neck portion (14) into a head-side recess portion and a bottom-side recess portion; and/or
wherein at least one protrusion (10) and/or at least one recess (12), as seen in plan view, has the shape of a rounded puzzle piece protrusion or a rounded puzzle piece recess, or the shape of a dovetail.

6. Metallic flat material (22) for producing a thin-walled pipe (2) according to any of the preceding claims by rolling or bending, comprising the following features:
a first longitudinal edge (24) and an opposite second longitudinal edge (26),
wherein at least one connecting element in the form of a protrusion (10) is arranged on the first longitudinal edge (24) and at least one corresponding connecting element in the form of a recess (12) is arranged on the second longitudinal edge (26) in a corresponding longitudinal position;
wherein the connecting element formed as a protrusion (10) is bent with respect to the plane of the main body of the metallic flat material (22); and
wherein the protrusion (28, 30) has a straight course as seen in a front view of the first longitudinal edge (24) and encloses an angle with the plane of the main body of the metallic flat material (22);
wherein the protrusion (10) is formed with an oversize relative to the corresponding recess (12); and
wherein the length of the protrusion (10) substantially corresponds to the length of the recess (12);
wherein at least one protrusion (28) with a first direction of extension and at least one protrusion (30) with a second direction of extension are provided;
wherein the protrusion (28) with first direction of extension, as seen in a front view of the first longitudinal edge (24), has a relative gradient from the first flat material end to the second flat material end; and
wherein the protrusion (30) with second direction of extension, as seen in a front view of the first longitudinal edge (24), has a relative gradient from the second flat material end to the first flat material end,
wherein the flat metallic material (22) has a wall thickness of 0.05 - 0.10 mm; and
the width of the protrusion (10) is greater than the width of the corresponding recess (12) by an oversize of 0.05 - 1.0 mm for enhancing the formation of a respective inclined course of protrusion flank to the respective abutting recess flank.

7. Metallic flat material (22) according to claim 6,
wherein the sequence of the protrusions (28) with a first direction of extension and of the protrusions (30) with a second direction of extension, as seen along the longitudinal edge (24, 26), is at least in portions as follows:
alternately one protrusion (28) each with a first direction of extension and one to five protrusions (30) each with a second direction of extension;
alternately two protrusions (28) each with a first direction of extension and one to five protrusions (30) each with a second direction of extension;
alternately three protrusions (28) each with a first direction of extension and one to five protrusions (30) each with a second direction of extension.

8. Metallic flat material (22, 48) according to any of claims 6 to 7,
wherein at least one protrusion (10) and/or at least one recess (12) has a tapered neck portion (14) and a widened head portion (16); and/or
wherein at least one protrusion (10) and/or at least one recess (12) has a tapered neck portion (14) and a widened head portion (16), with an intermediate collar (50) in the neck portion, which subdivides the neck portion (14) into a head-side recess portion and a bottom-side recess portion; and/or
wherein at least one protrusion (10) and/or at least one recess (12), as seen in plan view, has the shape of a rounded puzzle piece protrusion or a rounded puzzle piece recess, or the shape of a dovetail.

9. Method for producing a thin-walled pipe (2) according to any of claims 1 to 5, comprising the following steps:
providing a metallic flat material (22) according to any of claims 6 to 8;
rolling or bending the metallic flat material (22) into a thin-walled pipe (2), using a mandrel or center piece and a block or counterpart pressing against the same from the outside; and
joining the longitudinal edges (24, 26) together such
that the connecting elements positively engage with each other along a connecting portion (6) extending in the pipe longitudinal direction (8); and
that the at least one connecting element formed as a protrusion (10), which is bent at least partially with respect to the plane of the main body of the metallic flat material (22), is bent into the plane of the connecting portion (6) such that the pair made up of the protrusion flank of this protrusion (10) and of the abutting recess flank, as seen in an axial sectional plane (A-A) extending along the connecting portion (6), in each case has an inclined course from pipe outer wall to pipe inner wall and/or encloses an angle of 15 - 75°, in particular 30 - 60°, with the pipe radial plane;
wherein the fact that the width of the protrusion (10) is greater than the width of the corresponding recess (10) by an oversize of 0.05 - 1.0 mm enhances the formation of a respective inclined course of protrusion flank to the respective abutting recess flank;
wherein a pair (32) of a protrusion flank and of an abutting recess flank, as seen in a sectional plane along the connecting portion (6), in each case has an inclined course with a first oblique direction of extension from the pipe outer wall to the pipe inner wall in the direction of one of the pipe ends (20);
wherein a pair (34) of a protrusion flank and of an abutting recess flank, as seen in a sectional plane along the connecting portion (6), in each case has an inclined course with an opposite second oblique direction of extension from the pipe outer wall to the pipe inner wall in the direction of the other pipe end (18); and
wherein pairs (32) of a protrusion flank and of an abutting recess flank with a first oblique direction of extension, as seen along the connecting portion (6), are arranged alternately with pairs (34) of a protrusion flank and of an abutting recess flank with an opposite second oblique direction of extension, so that the protrusions (28, 30) and recesses (12), as seen in a sectional plane (A-A) along the connecting portion (6), in particular alternately have substantially the shape of a parallelogram (36) and substantially the shape of a trapezoid (38).

## Revendications

1. Tuyau à paroi mince (2), présentant les caractéristiques suivantes :
un matériau plat métallique (22) mince enroulé ou courbé en tuyau (2), dont les bords longitudinaux (24, 26) sont reliés en s'engageant l'un dans l'autre par complémentarité de forme d'éléments de liaison le long d'une section de liaison (6) s'étendant dans le sens longitudinal (8) du tuyau ;
le tuyau (2) présentant une première extrémité axiale (18) et une deuxième extrémité axiale (20) ;
les éléments de liaison étant des saillies (10) sur le premier bord longitudinal (24) du matériau plat (22) et des évidements correspondants (12) sur le deuxième bord longitudinal (26) du matériau plat (22) ; et
au moins une saillie (10) s'engageant dans un évidement correspondant (12) de telle sorte que les flancs de la saillie (10) s'appuient au moins par endroits dans le sens longitudinal (8) du tuyau contre les flancs respectivement adjacents de l'évidement correspondant (12) ;
**caractérisé en ce que**
le matériau plat (22) a une épaisseur de paroi comprise entre 0,05 et 1,00 mm ;
au moins une paire (32, 34) composée d'un flanc de saillie et d'un flanc d'évidement adjacent à celui-ci, vue selon un plan de coupe axial (A-A) s'étendant le long de la section de liaison (6), présente respectivement une inclinaison de la paroi extérieure du tuyau vers la paroi intérieure du tuyau et forme respectivement un angle de 15 à 75°, en particulier de 30 à 60° avec le plan radial du tuyau ;
au moins une paire (32) composée d'un flanc de saillie et d'un flanc d'évidement adjacent à celui-ci, vue selon un plan de coupe le long de la section de liaison (6), présente respectivement une inclinaison selon une première direction d'inclinaison allant de la paroi extérieure du tuyau vers la paroi intérieure du tuyau, en direction de l'une des extrémités du tuyau (20) ;
au moins une paire (34) composée d'un flanc de saillie et d'un flanc d'évidement adjacent à celui-ci, vue selon un plan de coupe le long de la section de liaison (6), présente respectivement une inclinaison selon une deuxième direction d'inclinaison opposée allant de la paroi extérieure du tuyau vers la paroi intérieure du tuyau, en direction de l'autre extrémité du tuyau (18) ; et
des paires (32) composées d'un flanc de saillie et d'un flanc d'évidement adjacent à celui-ci, avec une première direction d'inclinaison, vues le long de la section de liaison (6), sont disposées en alternance avec des paires (34) composées d'un flanc de saillie et d'un flanc d'évidement adjacent à celui-ci ayant une deuxième direction d'inclinaison opposée, de sorte que les saillies (28, 30) et les évidements (12), en particulier, vus selon un plan de coupe (A-A) le long de la section de liaison (6), ont tour à tour sensiblement la forme d'un parallélogramme (36) et sensiblement la forme d'un trapèze (38).

2. Le tuyau (2) selon la revendication 1,
dans lequel l'ordre des paires (32, 34) composées d'un flanc de saillie et d'un flanc d'évidement adjacent à celui-ci, vues le long de la section de liaison (6), est, du moins partiellement, le suivant :
alternativement deux paires (32) avec une première direction d'inclinaison et deux, quatre ou six paires (34) avec une deuxième direction d'inclinaison opposée ; ou
alternativement quatre paires (32) avec une première direction d'inclinaison et deux, quatre ou six paires (34) avec une deuxième direction d'inclinaison opposée ;
alternativement six paires (32) avec une première direction d'inclinaison et deux, quatre ou six paires (34) avec une deuxième direction d'inclinaison opposée.

3. Le tuyau (2) selon l'une quelconque des revendications précédentes,
dans lequel au moins une saillie (10) s'engage dans un évidement correspondant (12) de telle sorte que la face frontale (17) de la saillie (10) repose au moins par endroits contre la face frontale (17) de l'évidement correspondant (12) ; et/ou
dans lequel les faces frontales (17) se trouvent essentiellement sur un plan axial s'étendant le long de la section de liaison (6).

4. Le tuyau (2) selon l'une quelconque des revendications précédentes,
dans lequel un bourrelet, une zone d'accumulation de matériau ou une zone d'épaississement de matériau est formé dans la zone de contact d'au moins une paire (32, 34) composée d'un flanc de saillie et d'un flanc d'évidement qui lui est adjacent.

5. Le tuyau (2) selon l'une quelconque des revendications précédentes,
dans lequel au moins une saillie (10) et/ou au moins un évidement (12) présentent une zone rétrécie au niveau du col (14) et une zone élargie au niveau de la tête (16) ; et/ou
dans lequel au moins une saillie (10) et/ou au moins un évidement (12) présentent une zone rétrécie au niveau du col (14) et une zone élargie au niveau de la tête (16) avec un collet intermédiaire (50) dans la zone de col, qui divise la zone de col (14) en une partie évidée côté tête et une partie évidée côté fond ; et/ou
dans lequel au moins une saillie (10) et/ou au moins un évidement (12), vus du dessus, ont la forme d'une saillie arrondie d'une pièce de puzzle ou d'un évidement arrondi d'une pièce de puzzle, ou ont la forme d'une queue d'aronde.

6. Matériau plat métallique (22) pour la production d'un tuyau à paroi mince (2) selon l'une quelconque des revendications précédentes par enroulement ou cintrage, présentant les caractéristiques suivantes:
un premier bord longitudinal (24) et un deuxième bord longitudinal opposé (26),
au moins un élément de liaison réalisé en saillie (10) étant disposé sur le premier bord longitudinal (24) et au moins un élément de liaison correspondant réalisé en évidement (12) étant disposé sur le deuxième bord longitudinal (26) en une position longitudinale correspondante ;
l'élément de liaison réalisé en saillie (10) étant courbé par rapport au plan du corps principal du matériau plat métallique (22) ;
la saillie (28, 30), vue de face sur le premier bord longitudinal (24), ayant un tracé rectiligne et formant un angle avec le plan du corps principal du matériau plat métallique (22) ;
la saillie (10) étant réalisée de manière surdimensionnée par rapport à l'évidement correspondant (12) ; et
la longueur de la saillie (10) correspondant sensiblement à la longueur de l'évidement (12) ;
au moins une saillie (28) avec une première direction d'extension et au moins une saillie (30) avec une deuxième direction d'extension étant prévues ;
la saillie (28) avec la première direction d'extension, vue de face sur le premier bord longitudinal (24), présentant une pente relative entre la première extrémité du matériau plat et la deuxième extrémité du matériau plat ; et
la saillie (30) avec une deuxième direction d'extension, vue de face sur le premier bord longitudinal (24), présentant une pente relative de la deuxième extrémité du matériau plat vers la première extrémité du matériau plat ;
le matériau plat métallique (22) ayant une épaisseur de paroi comprise entre 0,05 et 1,00 mm ;
la largeur de la saillie (10) étant supérieure de 0,05 à 1,0 mm à la largeur de l'évidement correspondant (12), afin de favoriser la formation d'une inclinaison respective du flanc de saillie au flanc d'évidement qui lui est adjacent.

7. Le matériau plat métallique (22) selon la revendication 6,
dans lequel l'ordre des saillies (28) avec une première direction d'extension et des saillies (30) avec une deuxième direction d'extension, vu le long du bord longitudinal (24, 26), est au moins par endroits le suivant :
alternativement une saillie (28) avec une première direction d'extension et une à cinq saillies (30) avec une deuxième direction d'extension ;
alternativement deux saillies (28) avec une première direction d'extension et une à cinq saillies (30) avec une deuxième direction d'extension ;
alternativement trois saillies (28) avec une première direction d'extension et une à cinq saillies (30) avec une deuxième direction d'extension.

8. Le matériau plat métallique (22, 48) selon l'une quelconque des revendications 6 à 7,
dans lequel au moins une saillie (10) et/ou au moins un évidement (12) présentent une zone rétrécie au niveau du col (14) et une zone élargie au niveau de la tête (16) ; et/ou
dans lequel au moins une saillie (10) et/ou au moins un évidement (12) présentent une zone rétrécie au niveau du col (14) et une zone élargie au niveau de la tête (16), avec un collet intermédiaire (50) dans la zone de col, qui divise la zone de col (14) en une partie évidée côté tête et une partie évidée côté fond ; et/ou
dans lequel au moins une saillie (10) et/ou au moins un évidement (12), vus du dessus, ont la forme d'une saillie arrondie d'une pièce de puzzle ou d'un évidement arrondi d'une pièce de puzzle, ou ont la forme d'une queue d'aronde.

9. Procédé de production d'un tuyau à paroi mince (2) selon l'une quelconque des revendications 1 à 5, présentant les étapes suivantes :
mise à disposition d'un matériau plat métallique (22) selon l'une quelconque des revendications 6 à 8 ;
enroulement ou cintrage du matériau plat métallique (22) pour former un tuyau à paroi mince (2), à l'aide d'un mandrin ou d'une pièce centrale et d'un bloc ou d'une contrepièce exerçant une pression extérieure sur celui-ci ; et
assemblage des bords longitudinaux (24, 26) de manière à ce que les éléments de liaison s'engagent les uns dans les autres par complémentarité de forme le long d'une section de liaison (6) s'étendant dans le sens longitudinal (8) du tuyau ; et
que l'élément de liaison réalisé en tant que saillie (10), un au moins, qui est au moins partiellement courbé par rapport au plan du corps principal du matériau plat métallique (22), est courbé dans le plan de la section de liaison (6) de telle sorte que la paire formée par le flanc de saillie de cette saillie (10) et par le flanc d'évidement qui lui est adjacent, selon un plan de coupe axial (A-A) s'étendant le long de la section de liaison (6), présente respectivement une inclinaison de la paroi extérieure du tuyau vers la paroi intérieure du tuyau et/ou forme un angle de 15 à 75°, en particulier de 30 à 60° par rapport au plan radial du tuyau ;
dans lequel, du fait que la largeur de la saillie (10) est supérieure de 0,05 à 1,0 mm à la largeur de l'évidement correspondant (12), cela favorise la formation d'une inclinaison respective du flanc de saillie au flanc d'évidement qui lui est adjacent ;
dans lequel une paire (32) composée d'un flanc de saillie et d'un flanc d'évidement adjacent à celui-ci, vue selon un plan de coupe le long de la section de liaison (6), présente respectivement une inclinaison selon une première direction d'inclinaison allant de la paroi extérieure du tuyau vers la paroi intérieure du tuyau en direction de l'une des extrémités du tuyau (20) ;
dans lequel une paire (34) composée d'un flanc de saillie et d'un flanc d'évidement adjacent à celui-ci, vue selon un plan de coupe le long de la section de liaison (6), présente respectivement une inclinaison selon une deuxième direction d'inclinaison opposée, allant de la paroi extérieure du tuyau vers la paroi intérieure du tuyau en direction de l'autre extrémité du tuyau (18) ; et
dans lequel des paires (32) composées d'un flanc de saillie et d'un flanc d'évidement adjacent à celui-ci, avec une première direction d'inclinaison, vues le long de la section de liaison (6), sont disposées en alternance avec des paires (34) composées d'un flanc de saillie et d'un flanc d'évidement adjacent à celui-ci ayant une deuxième direction d'inclinaison opposée, de sorte que les saillies (28, 30) et les évidements (12), en particulier, vus selon un plan de coupe (A-A) le long de la section de liaison (6), ont tour à tour sensiblement la forme d'un parallélogramme (36) et sensiblement la forme d'un trapèze (38).
